# FASCICULE DE BREVET EUROPEEN

(11) **EP 3 867 727 B1**
(45) Date de publication et mention de la délivrance du brevet: **12.07.2023**
(21) Numéro de dépôt: 18819176.1
(22) Date de dépôt: 18.10.2018
(51) Int. Cl.: G05D 16/10

(54) **DÉTENDEUR AVEC SOUPAPE DE SÉCURITÉ INTÉGRÉE POUR UNE DÉCHARGE EN CAS DE SURPRESSION AVAL**
DRUCKREGLER MIT EINGEBAUTEM SICHERHEITSVENTIL ZUR DRUCKENTLASTUNG IM FALL VON ÜBERDRUCK STROMABWÄRTS
PRESSURE REGULATOR WITH INBUILT SAFETY VALVE TO RELIEVE PRESSURE IN THE EVENT OF AN OVERPRESSURE DOWNSTREAM

(43) Date de publication de la demande: 25.08.2021
(73) Titulaire: Alcrys Fluid-Control & Services, 13120 Gardanne (FR)
(72) Inventeur: HEYRAL, Olivier, 13590 MEYREUIL (FR); ZSIGMOND, Zsolt, 95580 MARGENCY (FR)
(74) Mandataire: Germain Maureau
(86) Numéro de dépôt international: PCT/FR2018/052600
(87) Numéro de publication internationale: WO 2020/079328

(56) Documents cités:
- FR-A1- 3 003 656
- US-A1- 2014 000 809
- US-A1- 2015 337 769
- US-A1- 2016 281 873

## Description

La présente invention se rapporte à un détendeur de gaz, ainsi qu'à un dispositif de remplissage et de soutirage de gaz muni d'un tel détendeur.

Classiquement, un dispositif de remplissage et de soutirage de gaz comprend un circuit de soutirage muni d'un raccord de stockage raccordé à un récipient de stockage d'un gaz sous pression et d'un raccord de soutirage raccordé à un organe de soutirage du gaz à pression réduite, et un circuit de remplissage muni d'un raccord de remplissage conformé pour un raccordement avec une source de gaz sous pression pour le remplissage du récipient de stockage.

L'invention trouve une application particulière, et non limitative, dans le remplissage et le soutirage d'hydrogène gazeux pour alimenter un organe de soutirage de type pile à combustible, en particulier au sein d'un véhicule.

Pour soutirer du gaz sous haute pression, classiquement entre 350 et 700 bars pour les réservoirs de stockage d'hydrogène gazeux, afin de le distribuer à basse pression, classiquement entre 1 et 5 bars, il est indispensable de recourir à un dispositif ou robinet de remplissage et de soutirage de gaz qui va avoir pour fonction de permettre un raccordement avec une source de pression dans le but de remplir lorsque nécessaire le récipient de stockage, et aussi de contrôler les opérations de soutirage de gaz parmi lesquelles figurent les opérations d'isolement, de sécurité et de détente du gaz.

L'état de la technique peut être illustré par l'enseignement du document WO 2013/135983 qui divulgue un robinet de remplissage et de soutirage de gaz, dans lequel est prévu un circuit de sécurité raccordé au circuit de soutirage et comprenant une soupape de sécurité pour évacuer vers l'extérieur le contenu du réservoir en cas de situation dangereuse (température et/ou pression excessive).

Il est aussi connu du document US2015/337769 un détendeur employé dans la régulation d'un débit d'hydrogène gazeux, lequel détendeur étant conforme au préambule de la revendication 1.

L'état de la technique peut également être illustré par les documents FR 2 879 721, US 2014/0000809, FR 3 003 656 et US 2016/0281873 qui divulguent chacun un détendeur de gaz classique, ainsi que par le document FR 2 984 448 qui concerne un détendeur de gaz avec sécurité de surpression intégrée.

L'invention propose un détendeur qui intègre une soupape de décharge configurée pour une décharge vers un circuit de fuite en cas de surpression en aval, c'est-à-dire en cas de dépassement de la pression aval au-delà d'une pression seuil prédéfinie. En effet, dans le domaine de la détente de gaz, une surpression aval est susceptible d'endommager le matériel, et en particulier les joints d'étanchéité avec pour conséquence des fuites.

De telles fuites peuvent être particulièrement critiques dans le cadre des dispositifs de remplissage et de soutirage d'hydrogène gazeux, en particulier au sein d'un véhicule transportant des personnes.

La présente invention a notamment pour but de proposer un détendeur qui intègre une telle soupape de décharge en cas de surpression c'est-à-dire que le détendeur possède sa propre soupape de décharge, ce qui contribue à une sécurité et une compacité accrues.

Un autre but de l'invention est de proposer un détendeur fiable pour détendre un gaz entre une pression amont de l'ordre de 350 à 700 bars et une pression aval de l'ordre de 10 à 30 bars, et aussi pour détendre un gaz entre une pression amont de l'ordre de 10 à 30 bars et une pression aval de l'ordre de 0,5 à 5 bars.

Un autre but de l'invention est de proposer un détendeur adapté pour un dispositif de remplissage et de soutirage à la fois d'encombrement et de poids réduits.

A cet effet, elle propose un détendeur comprenant :
- un corps aval statique délimitant une chambre basse pression en sortie du détendeur ;
- un corps amont délimitant une chambre haute pression en entrée du détendeur et portant un siège de détente disposé en regard d'un canal interne ménagée dans une portion supérieure du corps amont ;
- un piston mobile formant une pièce de régulation sur laquelle appuie d'un côté le gaz de la chambre basse pression et de l'autre côté un premier organe de rappel ;
- un clapet de régulation coopérant avec la pièce de régulation et mobile relativement au siège de détente entre une position amont de fermeture de la communication entre la chambre basse pression et la chambre haute pression et une position aval d'ouverture de la communication entre la chambre basse pression et la chambre haute pression ;
ce détendeur étant remarquable en ce que
(i) le piston présente un canal interne traversant ayant deux extrémités opposées :
   - une extrémité supérieure ouverte, du côté du corps aval, faisant face à la chambre basse pression et formant un siège de décharge, et
   - une extrémité inférieure qui débouche sur une chambre intermédiaire intercalée entre le corps amont et le corps aval, où ladite chambre intermédiaire est raccordée à un circuit de fuite ;
(ii) le détendeur comprend en outre une tige de soupape tubulaire munie d'un canal interne, la tige de soupape traversant à la fois le canal interne du piston et le canal interne de la portion supérieure du corps amont, de sorte que cette tige de soupape présente :
   - une extrémité supérieure évasée formant un clapet de décharge propre à venir en appui sur le siège de décharge prévu à l'extrémité supérieure du canal interne du piston ; et
   - une extrémité inférieure formant le clapet de régulation propre à venir en appui sur le siège de détente ;
(iii) le premier organe de rappel est comprimé entre le piston et le corps amont en sollicitant le piston en direction du corps aval, et un second organe de rappel est comprimé entre le piston et un plateau solidaire de la tige de soupape sollicitant la tige de soupape, relativement au piston, dans le sens d'un plaquage du clapet de décharge contre le siège de décharge.

Ainsi, ce détendeur intègre une soupape de décharge configurée pour une décharge vers un circuit de fuite en cas de surpression en aval, où cette soupape de décharge comprend le clapet de décharge formé au niveau de la tige de soupape, le siège de décharge formé au niveau du piston, et le second organe de rappel.

En effet, en cas de surpression dans la chambre basse pression, c'est-à-dire dans le cas où la pression aval dépasse une pression seuil prédéfinie (qui dépend des surfaces d'appui du gaz et des coefficients de rappel des organes de rappel) :
- la surpression dans la chambre basse pression agit sur le piston dans le sens d'un décollement vis-à-vis du corps aval suffisant pour que le clapet de régulation soit en position amont de fermeture, sous l'effet du second organe de rappel qui pousse la tige de soupape ;
- la tige de soupape étant en butée sur le siège de détente et le piston étant suffisamment écarté du corps aval, le clapet de décharge décolle du siège de décharge et passe ainsi en position aval d'ouverture, autorisant la communication entre la chambre basse pression et la conduite de décharge raccordée au circuit de fuite, et ainsi la décharge s'effectue dans le circuit de fuite et la pression aval est relâchée.

Selon une caractéristique, le second organe de rappel s'étend à l'intérieur du premier organe de rappel.

Selon une variante, le premier organe de rappel et le second organe de rappel sont des ressorts hélicoïdaux.

Selon une autre caractéristique, le plateau est formé d'un circlips serré autour de la tige de soupape. En variante, ce plateau est soudé ou serti sur la tige de soupape, ou bien ce plateau vient de matière avec la tige de soupape.

Dans une réalisation particulière, la portion supérieure du corps amont est munie d'un filetage externe pour une fixation par vissage dans un alésage.

Dans un mode de réalisation particulier, le corps amont présente la portion supérieure prolongée par une portion inférieure, où la portion supérieure fait face au piston, et ladite portion inférieure présente une coupole inférieure en appui sur le fond d'un alésage pour une entrée de gaz, où cette coupole inférieure est munie de trous latéraux débouchant dans la chambre haute pression.

Avantageusement, la coupole inférieure présente une face supérieure en regard de l'extrémité inférieure du canal interne de la portion supérieure du corps amont, et une cavité est formée dans cette face supérieure pour former le siège de détente.

Selon une possibilité de l'invention, la portion inférieure du corps amont comprend une paroi cylindrique qui entoure la face supérieure de la coupole inférieure, où cette paroi cylindrique est munie de trous latéraux débouchant dans la chambre haute pression.

Selon une autre possibilité de l'invention, le corps aval forme un couvercle ou bouchon accessible de l'extérieur d'un corps.

Avantageusement, le corps aval présente en périphérie extérieure deux joints d'étanchéité toriques à l'intérieur d'un alésage, et une conduite de fuite raccordée au circuit de fuite débouche dans l'alésage entre les deux joints d'étanchéité.

Conformément à une autre caractéristique de l'invention, le corps aval est fixé par vissage à l'intérieur d'un alésage.

Dans un mode de réalisation avantageux, le détendeur comprend un système de sécurité avec réarmement manuel conformé pour fermer automatiquement la communication entre la chambre basse pression et la chambre haute pression lorsque la pression aval dans la chambre basse pression passe en-dessous d'une pression seuil basse prédéfinie correspondant à une augmentation du débit de gaz en sortie du détendeur, notamment associée à une fuite en aval (et en particulier à une fuite dans un organe de soutirage placé en aval du détendeur).

Un tel système de sécurité permet :
- une fermeture de la communication entre la chambre basse pression et la chambre haute pression dans le cas où la pression aval (pression dans la chambre basse pression) passe en-dessous d'une pression seuil basse (ou valeur de consigne) ;
- interdire une remise en fonctionnement du détendeur tant que le défaut de chute de pression (qui traduit notamment une fuite dans l'organe de soutirage) n'est pas résolu ;
- permettre une remise en fonctionnement du détendeur uniquement par un réarmement manuel, une fois résolu le défaut de chute de pression (ou de fuite dans l'organe de soutirage).

Cette pression seuil basse peut être établie en considérant une valeur maximale de débit du gaz en sortie du détendeur qui est considérée comme un seuil haut à ne pas dépasser pour le débit car traduisant un dysfonctionnement au niveau de l'organe de soutirage pouvant correspondre à une fuite.

Selon une caractéristique, le système de sécurité comprend un doigt obturateur monté mobile dans le corps aval en regard de l'extrémité supérieure ouverte de la tige de soupape, où ce doigt obturateur est déplaçable sélectivement entre :
- une position abaissée dans laquelle le doigt obturateur est rapproché de l'extrémité supérieure ouverte de la tige de soupape ; et
- une position relevée dans laquelle le doigt obturateur est éloigné de l'extrémité supérieure ouverte de la tige de soupape.

Selon une autre caractéristique, le doigt obturateur est monté coulissant dans un orifice ménagé traversant dans le corps aval.

Avantageusement, le doigt obturateur présente en périphérie extérieure deux joints d'étanchéité toriques à l'intérieur de l'orifice du corps aval, une conduite de fuite raccordée au circuit de fuite est ménagée dans le corps aval en débouchant dans ledit orifice entre les deux joints d'étanchéité.

Selon une possibilité, le système de sécurité comprend une vis de réglage vissée dans un filetage prévu dans l'orifice du corps aval pour permettre de déplacer sélectivement le doigt obturateur en vissant/dévissant la vis de réglage qui vient en butée sur le doigt obturateur.

Selon une autre possibilité, le système de sécurité comprend une vis d'arrêt creuse vissée dans un filetage prévu dans l'orifice du corps aval pour former une butée haute d'arrêt pour la vis de réglage, et une butée basse d'arrêt pour la vis de réglage est formée par un épaulement interne dans ledit orifice.

L'invention se rapporte également à un dispositif de remplissage et de soutirage de gaz, comprenant :
- un circuit de soutirage comprenant une extrémité amont munie d'un raccord de stockage conformé pour un raccordement avec un récipient de stockage d'un gaz sous pression, et une extrémité aval munie d'un raccord de soutirage conformé pour un raccordement avec un organe de soutirage du gaz à pression réduite, où ledit circuit de soutirage comprend au moins une vanne d'isolation pilotée et au moins un détendeur conforme à l'invention ;
- un circuit de remplissage comprenant une extrémité amont munie d'un raccord de remplissage conformé pour un raccordement avec une source de gaz sous pression pour le remplissage du récipient de stockage, et une extrémité aval raccordée à l'extrémité amont du circuit de soutirage.

Avantageusement, le circuit de soutirage comprend un premier détendeur et un second détendeur en série, où chaque détendeur est conforme à l'invention.

L'emploi de deux détendeurs en série permet de fiabiliser la régulation de la pression entre le récipient de stockage à haute pression et l'organe de soutirage fonctionnant à basse pression.

Selon une réalisation particulière, seul le second détendeur intègre un système de sécurité avec réarmement manuel tel que décrit ci-dessus.

L'invention se rapporte également à une utilisation d'un dispositif de remplissage et de soutirage selon l'invention, dans lequel le raccord de stockage est raccordé à un récipient de stockage d'hydrogène gazeux sous pression et le raccord de soutirage est raccordé à un organe de soutirage du type pile à combustible.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique illustrant la structure d'un exemple possible de réalisation d'un dispositif de remplissage et de soutirage selon l'invention ;

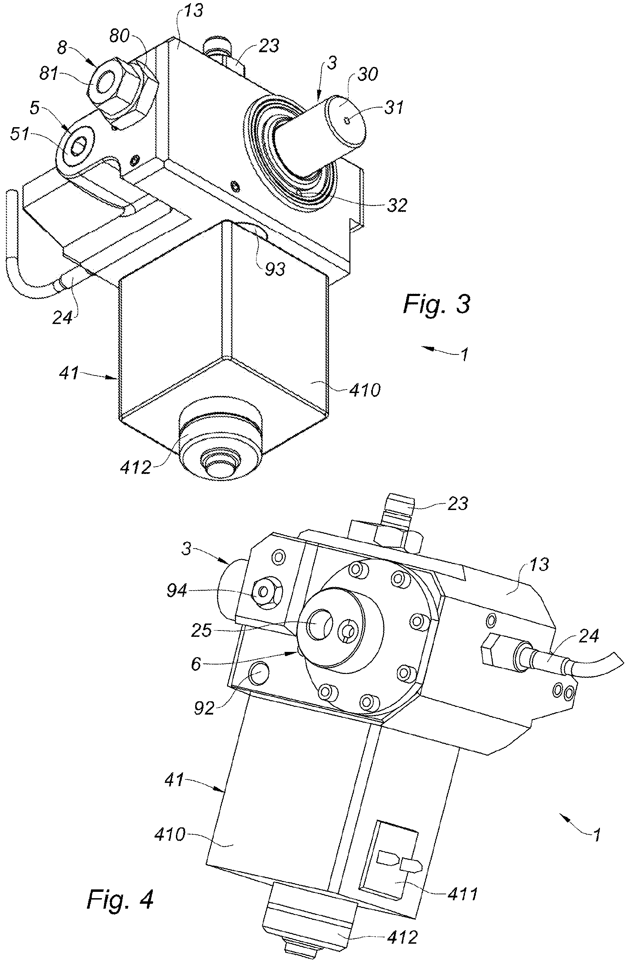

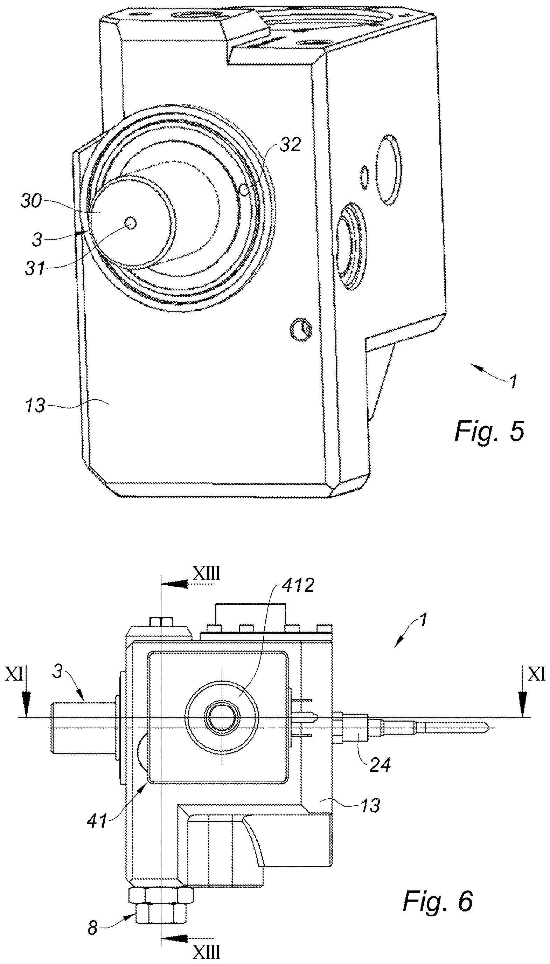

- les figures 2 à 5 sont des vues schématiques en perspective et selon différents angles de vue d'un dispositif de remplissage et de soutirage selon l'invention ;
- les figures 6 et 7 sont des vues schématiques de côté du dispositif des figures 2 à 5 ;
- les figures 8 et 9 sont des vues schématiques en coupe d'un raccord de remplissage du dispositif des figures 2 à 7, dans une position d'ouverture (figure 8) et dans une position de fermeture (figure 9) ;
- la figure 10 est une vue schématique en coupe du dispositif des figures 2 à 7 selon le plan de coupe X-X de la figure 7 ;
- la figure 11 est une vue schématique en coupe du dispositif des figures 2 à 7 selon le plan de coupe XI-XI de la figure 6 ;

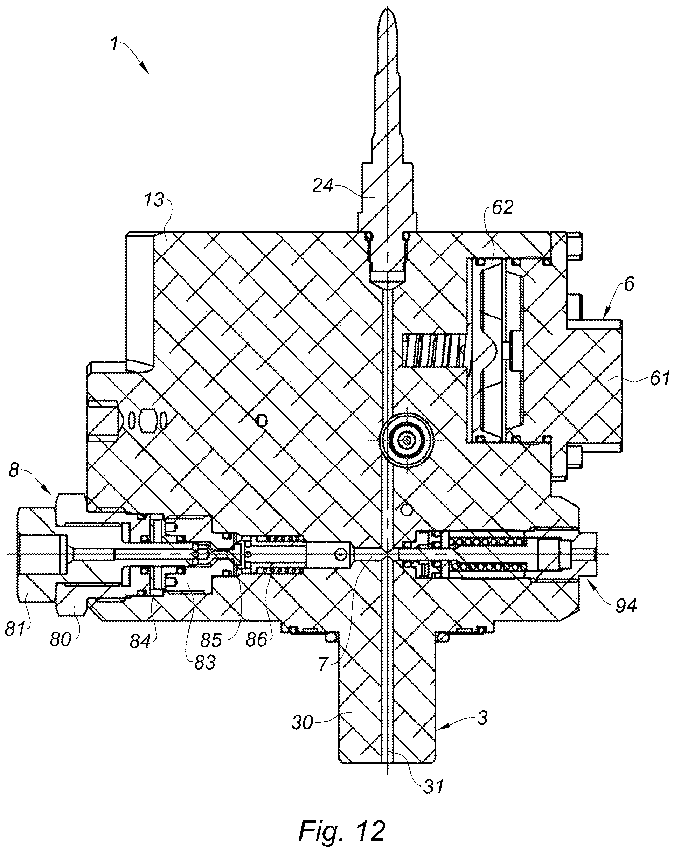

- la figure 12 est une vue schématique en coupe du dispositif des figures 2 à 7 selon le plan de coupe XII-XII de la figure 7 ;
- la figure 13 est une vue schématique en coupe du dispositif des figures 2 à 7 selon le plan de coupe XIII-XIII de la figure 6 ;

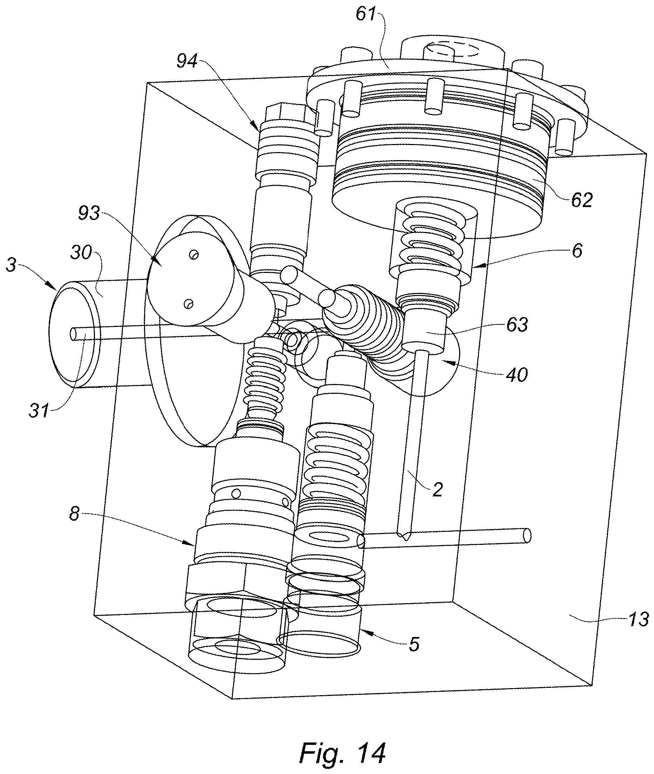

- la figure 14 est une vue schématique en perspective et partiellement transparente du dispositif des figures 2 à 7 ;
- les figures 15 à 18 sont des vues schématiques en perspective du dispositif des figures 2 à 7 coupé selon différents plans de coupe ;
- la figure 19 est une vue schématique en coupe d'une soupape de sécurité basse pression du dispositif des figures 2 à 7, illustrée dans un corps d'essai (et pas dans le corps du dispositif) pour des raisons de clarté ;
- la figure 20 est une vue schématique en coupe d'une vanne d'isolation pilotée du dispositif des figures 2 à 7, illustrée dans un corps d'essai, sans représentation de la motorisation ;
- les figures 21 et 22 sont des vues schématiques en coupe d'un premier détendeur conforme à l'invention, ou détendeur haute pression, pour le dispositif des figures 2 à 7, dans une configuration ouverte de repos ou de régulation (figure 21) et dans une configuration fermée de décharge en cas de surpression dans la chambre basse pression (figure 22) ;
- la figure 23 est une vue schématique de côté du premier détendeur des figures 21 et 22 ;
- les figures 24 à 27 sont des vues schématiques en coupe d'un second détendeur conforme à l'invention, ou détendeur basse pression, pour le dispositif des figures 2 à 7, dans une configuration verrouillée interdisant la régulation (figure 24), dans une configuration déverrouillée en première phase de réarmement après remontée du doigt obturateur (figure 25), dans une configuration déverrouillée en seconde phase d'armement (figure 26), dans une configuration ouverte de régulation (figure 27) ;
- la figure 28 est une vue schématique de côté du second détendeur des figures 24 et 27 ;
- la figure 29 est une vue zoomée sur une partie de la figure 13 illustrant schématiquement et en coupe une soupape de sécurité haute pression du dispositif des figures 2 à 7 ;
- la figure 30 est une vue schématique en coupe de la soupape de sécurité haute pression de la figure 29, illustrée dans un corps d'essai ;
- les figures 31 et 32 sont des vues schématiques en coupe d'une soupape de sécurité haute température du dispositif des figures 2 à 7, illustrée dans un corps d'essai, en configuration ouverte au-dessus d'une température seuil (figure 31) et en configuration fermée en-dessous de la température seuil (figure 32).

Un dispositif 1 de remplissage et de soutirage de gaz selon l'invention comprend un circuit de soutirage 2 comprenant :
- une extrémité amont 21 munie d'un raccord de stockage 3 conformé pour un raccordement avec un récipient de stockage RE d'un gaz sous pression, et
- une extrémité aval 22 munie d'un raccord de soutirage 25 conformé pour un raccordement avec un organe de soutirage (non illustré) du gaz à pression réduite.

Entre ces deux extrémités 21, 22, le circuit de soutirage 2 comprend successivement, en partant de l'extrémité amont 21, une vanne d'isolation pilotée 4, un premier détendeur 5 et un second détendeur 6. Le circuit de soutirage 2 comprend également, en amont de la vanne d'isolation pilotée 4, une sonde de température 23 et une sonde de pression 24.

Le premier détendeur 5 est associé à, ou intègre, une soupape de décharge 50 disposée en aval entre le circuit de soutirage 2 et un circuit de fuite 10, où cette soupape de décharge 50 est configurée pour une décharge vers le circuit de fuite 10 en cas de surpression en aval, c'est-à-dire en cas de dépassement de la pression aval au-delà d'une première pression seuil prédéfinie (appelée aussi valeur de réglage ou valeur de tarage).

Autrement dit, si la pression aval dépasse cette première pression seuil, un clapet de décharge de la soupape de décharge 50 est soulevé en opposition à la force d'un organe de rappel, de sorte que la soupape de décharge 50 s'ouvre afin que la pression aval diminue dans le circuit de fuite 10 (côté sortie). La soupape de décharge 50 se referme dès que la pression aval devient inférieure à la première pression seuil.

Le second détendeur 6 est associé à, ou intègre, une soupape de décharge 60 disposée en aval entre le circuit de soutirage 2 et le circuit de fuite 10, où cette soupape de décharge 60 est configurée pour une décharge vers le circuit de fuite 10 en cas de surpression en aval, c'est-à-dire en cas de dépassement de la pression aval au-delà d'une seconde pression seuil prédéfinie (appelée aussi valeur de réglage ou valeur de tarage).

Autrement dit, si la pression aval dépasse cette seconde pression seuil, un clapet de décharge de la soupape de décharge 60 est soulevé en opposition à la force d'un organe de rappel, de sorte que la soupape de décharge 60 s'ouvre afin que la pression aval diminue dans le circuit de fuite 10 (côté sortie). La soupape de décharge 60 se referme dès que la pression aval devient inférieure à la seconde pression seuil.

Ce second détendeur 6 est suivi d'un limiteur de débit 600 avec un système de sécurité 601 avec réarmement manuel pour fermer le circuit de soutirage 2 en cas de baisse de la pression aval.

Le dispositif 1 comprend également un circuit de remplissage 7 comprenant une extrémité amont 71 munie d'un raccord de remplissage 8 conformé pour un raccordement avec une source de gaz SO sous pression pour le remplissage du récipient de stockage RE, et une extrémité aval 72 raccordée à l'extrémité amont 21 du circuit de soutirage 2.

Le dispositif 1 comprend un circuit de sécurité 9 ayant :
- une extrémité amont 91 raccordée à l'extrémité amont 21 du circuit de soutirage 2 ; et
- une extrémité amont 92 reliée à l'extérieur EXT, cette extrémité amont 92 formant un point de collecte sur l'extérieur.

Ce circuit de sécurité 9 comprend, en parallèle, une soupape de sécurité haute pression 93, une soupape de sécurité haute température 94 et un robinet de purge 95 avec limiteur de débit. Le robinet de purge 95 a pour fonction principale de permettre une vidange contrôlée du récipient de stockage RE.

Le dispositif 1 comprend le circuit de fuite 10 ayant :
- une sortie reliée à l'extérieur EXT, et plus spécifiquement reliée à l'extrémité amont 92 du circuit de sécurité 9, et
- des entrées raccordées à différents organes du dispositif 1, comme décrit ultérieurement, et notamment aux soupapes de sécurité 50, 60.

Ce circuit de fuite 10 comprend un clapet anti-retour 11 et une soupape de sécurité basse pression 12 ayant :
- une entrée raccordée à l'extrémité aval 22 du circuit de soutirage 2, en aval du second détendeur 6 et aussi du limiteur de débit 600 ; et
- une sortie d'échappement raccordée en amont du clapet anti-retour 11.

Dans le dispositif 1 décrit, le circuit de sécurité 9 et le circuit de fuite 10 sont en communication, et forment ensemble un seul et même circuit relié à l'extérieur EXT.

La suite de la description porte sur un exemple de réalisation de ce dispositif 1, dans une version compacte, légère, fiable et sécurisée.

Ce dispositif 1 comprend un corps 13 dans lequel sont ménagés des alésages formant des canalisations du circuit de soutirage 2, du circuit de remplissage 7, du circuit de fuite 10 et du circuit de sécurité 9, ainsi que des cavités de réception pour les différents organes du dispositif 1.

Le raccord de stockage 3 comprend un connecteur 30 cylindrique en saillie d'une face qui est traversé par une conduite principale 31 raccordée à l'extrémité amont 21 du circuit de soutirage 2, ce connecteur 30 étant prévu pour être connecté sur le récipient de stockage RE de sorte que le gaz circule dans la conduite principale 31. Bien entendu, la forme du connecteur 30 va dépendre de l'interface de connexion du récipient de stockage RE.

Le raccord de stockage 3 comprend également une conduite de fuite 32 raccordée au circuit de fuite 10 et débouchant entre deux joints d'étanchéité 33, 34 concentriques ; ces joints d'étanchéité 33, 34 étant positionnés autour du connecteur 30. Ainsi, une double barrière d'étanchéité est prévue entre la conduite de fuite 32 pour une sécurité optimale en cas de fuite au niveau du connecteur 30.

La vanne d'isolation pilotée 4 comprend une vanne 40 commandée par un organe moteur 41 entre une position de fermeture du circuit de soutirage 2 et une position d'ouverture du circuit de soutirage, avec l'action complémentaire d'un organe de rappel 42 qui sollicite la vanne 40 vers la position de fermeture en l'absence d'actionnement de l'organe moteur 41.

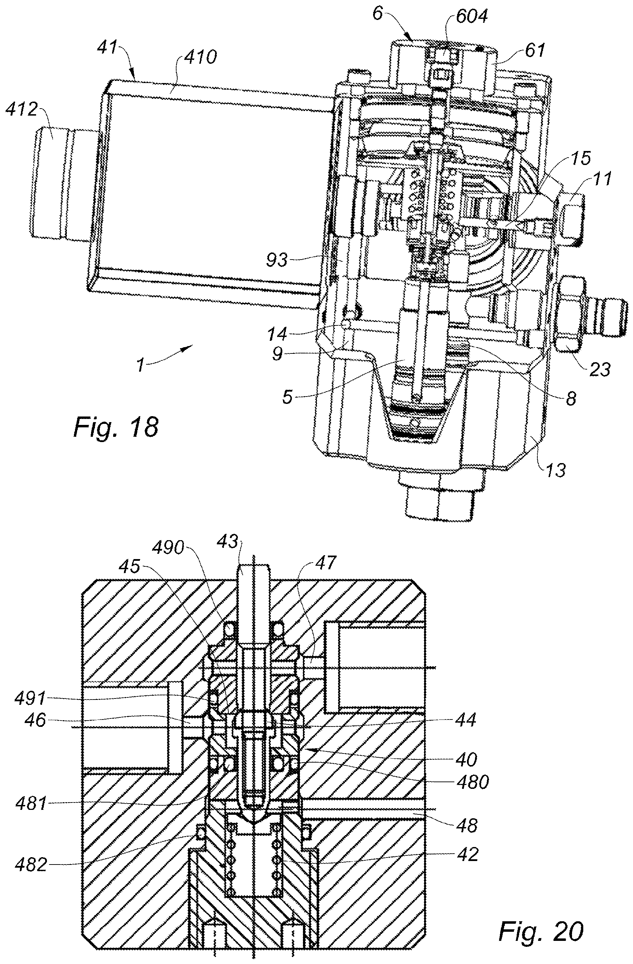

En référence à la figure 20, la vanne 40 comprend un piston 43 déplaçable sous l'action de l'organe moteur 41, ce piston 43 présentant un clapet d'isolement 44 qui prend appui sur un siège 45. L'organe moteur 41 commande le déplacement du piston 43 dans le sens d'un décollement du clapet d'isolement 44 vis-à-vis du siège 45 pour une ouverture de la vanne 40 entre son entrée 46 et sa sortie 47. L'organe de rappel 42, notamment du type ressort hélicoïdal, exerce quant à lui un effort sur le piston 43 pour le solliciter dans le sens d'un recollement du clapet d'isolement 44 sur le siège 45 pour une fermeture de la vanne 40.

La vanne 40 intègre une conduite de fuite 48 raccordée au circuit de fuite 10 et disposée en amont du clapet d'isolement 44, pour évacuer vers le circuit de fuite 10 d'éventuelles fuites au niveau de l'alésage réceptionnant la vanne 40 et également au niveau du piston 43 mobile. Cette conduite de fuite 48 est encadrée par des joints d'étanchéité 480, 481, 482 qui garantissent une double barrière d'étanchéité dans la gestion des fuites.

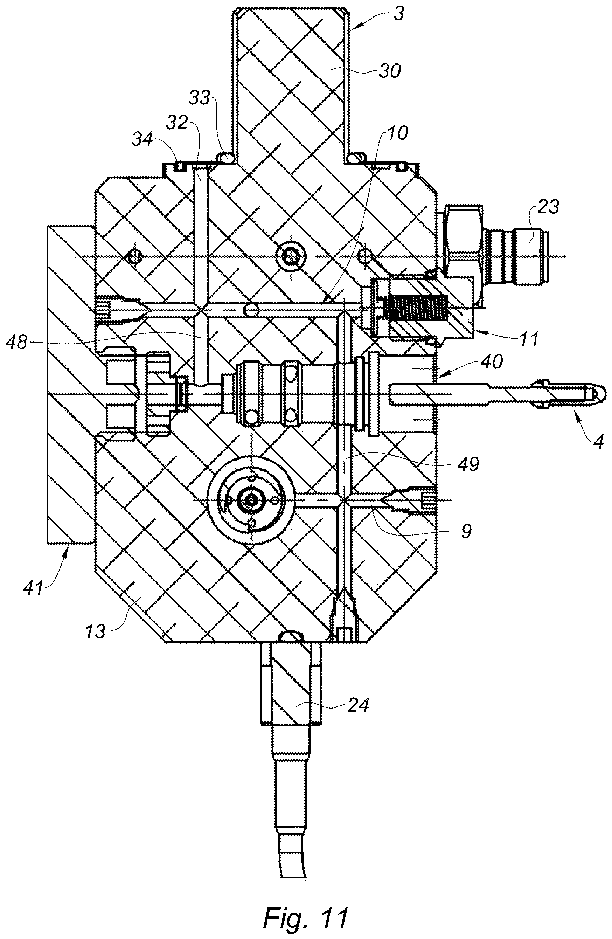

La vanne 40 intègre une autre conduite de fuite 49 (visible sur la figure 11) raccordée au circuit de fuite 10 et disposée en aval du clapet d'isolement 44, pour évacuer vers le circuit de fuite 10 d'éventuelles fuites au niveau de l'alésage réceptionnant la vanne 40 et également au niveau du piston 43 mobile. Cette conduite de fuite 49 est encadrée par des joints d'étanchéité 490, 491 qui garantissent une double barrière d'étanchéité dans la gestion des fuites.

L'organe moteur 41 est monté dans un carter moteur 410 fixé sur le corps 13 et une prise électrique 411 est prévue sur l'extérieur du carter moteur 410. Une molette 412 est également prévue sur l'extérieur du carter 410, où cette molette 412 permet de désactiver et de retirer l'organe moteur 41, de sorte que seul l'organe de rappel 42 agit dans le sens de la fermeture de la vanne 40.

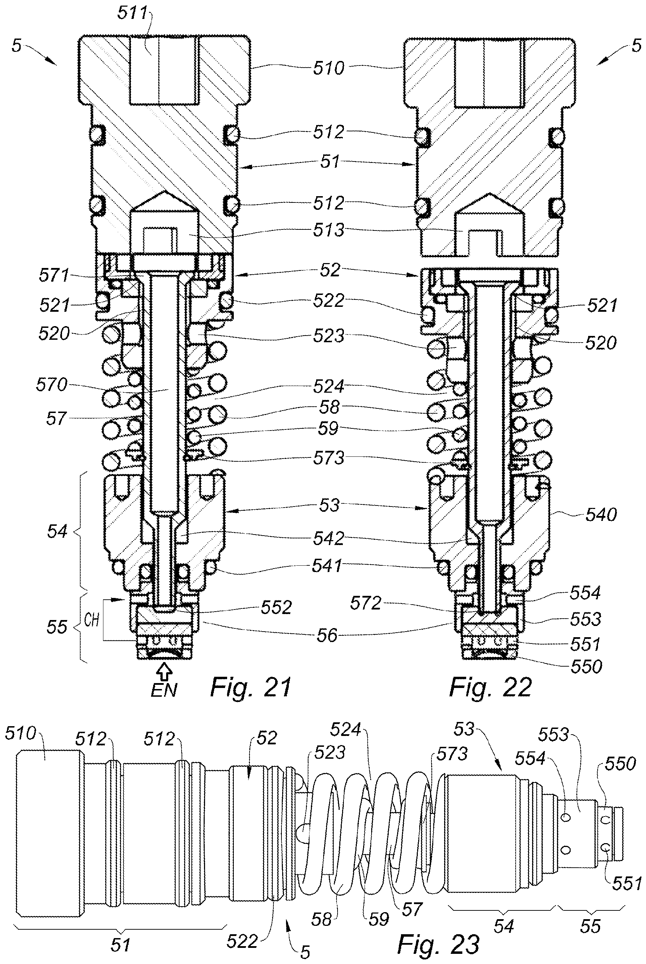

Le premier détendeur 5 est décrit ci-après en référence aux figures 21 à 23, où ce premier détendeur 5 est monté à l'intérieur d'un alésage dont le fond est en communication avec la sortie de la vanne 40.

Ce premier détendeur 5 comprend un corps aval 51 statique formant un couvercle ou bouchon accessible de l'extérieur et muni d'un filetage externe 510 pour une fixation par vissage dans le corps 13, ce corps aval 51 présentant :
- sur une face supérieure, un trou supérieur 511 borgne pour un outil de vissage/dévissage,
- en périphérie extérieure, deux joints d'étanchéité 512 toriques en-dessous du filetage externe 510, et
- sur une face inférieure opposée à la face supérieure, une cavité formant une chambre basse pression 513 en sortie du premier détendeur 5, cette chambre basse pression 513 étant reliée à l'entrée du second détendeur 6.

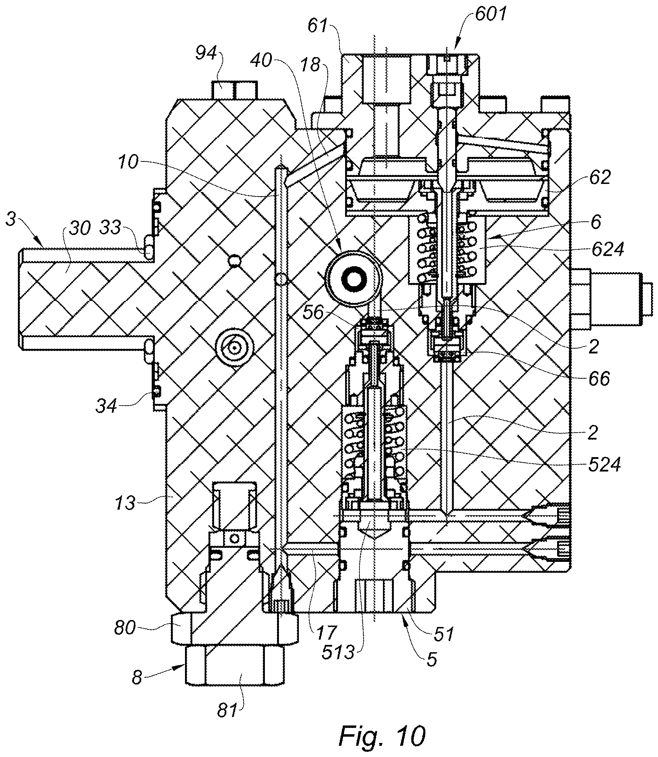

Une conduite de fuite 17 (visible sur la figure 10) ménagée dans le corps 13 est raccordée au circuit de fuite 10 et débouche dans l'alésage du premier détendeur 5 entre les deux joints d'étanchéité 512, avec à nouveau une double barrière d'étanchéité.

Ce premier détendeur 5 comprend une pièce de régulation formée d'un piston 52 mobile conformé pour venir en appui sur la face inférieure du corps aval 51, ce piston 52 étant muni en périphérie extérieure d'un joint d'étanchéité 522 torique, et présentant un canal interne 520 traversant ayant :
- une extrémité supérieure, du côté du corps aval 51, faisant face à la chambre basse pression 513 et formant un siège de décharge 521, et
- une extrémité inférieure 523 opposée qui débouche sur une chambre intermédiaire 524.

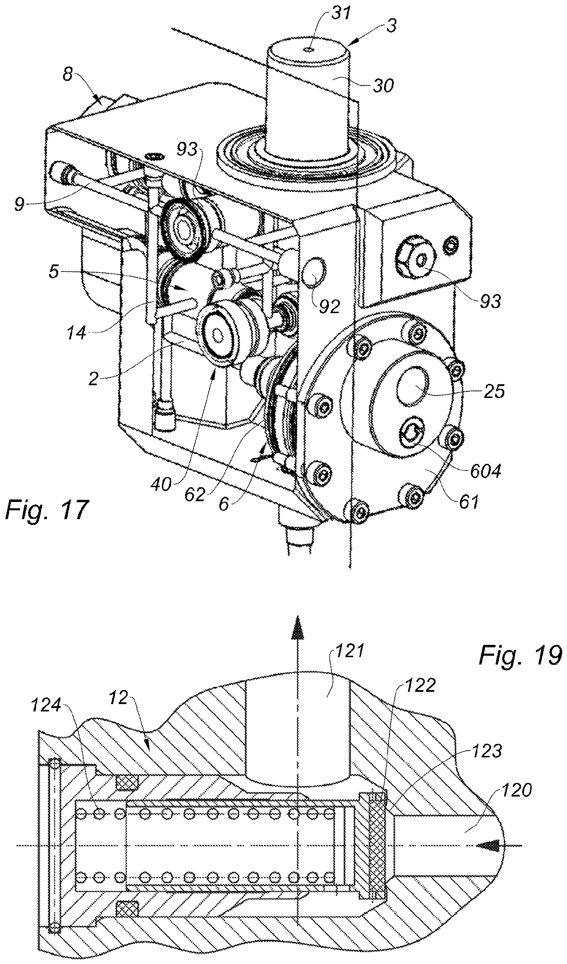

Ce premier détendeur 5 comprend un corps amont 53 statique présentant une portion supérieure 54 prolongée par une portion inférieure 55, où la portion supérieure 54 fait face au piston 52 de sorte que la chambre intermédiaire 524 est délimitée entre le piston 52 et la portion supérieure 54 du corps amont 53. La chambre intermédiaire 524 est reliée au circuit de fuite 10 ou au circuit de sécurité 9, via une conduite de décharge 14 ménagée dans le corps 13 et visible sur les figures 17 et 18.

La portion supérieure 54 est munie d'un filetage externe 540 pour une fixation par vissage dans le corps 13, et plus spécifiquement une fixation au fond de l'alésage correspondant, jusqu'à ce que cette portion supérieure 54 soit en butée sur un épaulement interne de l'alésage via un joint d'étanchéité 541.

Le corps amont 53 délimite avec le fond de l'alésage, sous l'épaulement interne, une chambre haute pression 56 en entrée du premier détendeur 5, cette chambre haute pression 56 étant reliée à la sortie de la vanne 40.

La portion supérieure 54 présente un canal interne 542 traversant ayant une extrémité supérieure qui débouche sur la chambre intermédiaire 524 et une extrémité inférieure qui débouche sur la chambre haute pression 56.

La portion inférieure 55 présente une coupole inférieure 550 en appui sur le fond de l'alésage pour une entrée EN du gaz sous haute pression, où cette coupole inférieure 550 est muni de trous latéraux 551 débouchant dans la chambre haute pression 56.

La coupole inférieure 550 présente une face supérieure en regard de l'extrémité inférieure du canal interne 542, et une cavité est formée dans cette face supérieure pour former un siège de détente 552.

La portion inférieure 55 comprend une paroi cylindrique 553 qui entoure la face supérieure de la coupole inférieure 550, où cette paroi cylindrique 553 est munie de trous latéraux 554 débouchant dans la chambre haute pression 56.

Ainsi, en entrée, le gaz entre à l'intérieur de la coupole inférieure 550 comme schématisé par la flèche EN sur la figure 21, puis le gaz sort dans la chambre haute pression 56 par les trous latéraux 551 et entre au niveau du siège de détente 552 par les trous latéraux 554 comme schématisé par la flèche CH sur la figure 21. Ce cheminement du gaz participe avantageusement à la fonction de détente du gaz recherchée.

Ce premier détendeur 5 comprend une tige de soupape 57 tubulaire munie d'un canal interne 570, la tige de soupape 57 traversant à la fois le canal interne 520 du piston 52 et le canal interne 542 de la portion supérieure 54 du corps amont 53, de sorte que cette tige de soupape 57 présente :
- une extrémité supérieure évasée formant un clapet de décharge 571 propre à venir en appui sur le siège de décharge 521 (autrement dit sur l'extrémité supérieure du canal interne 520) ; et
- une extrémité inférieure formant un clapet de régulation 572 propre à venir en appui sur le siège de détente 552.

Le clapet de régulation 572 est mobile relativement au siège de détente 552 entre :
- une position amont de fermeture de la communication entre la chambre basse pression 513 et la chambre haute pression 56 (via le canal interne 570), dans lequel le clapet de régulation 572 est en butée sur le siège de détente 552 ; et
- une position aval d'ouverture de la communication entre la chambre basse pression 513 et la chambre haute pression 56 (via le canal interne 570), dans lequel le clapet de régulation 572 est décollé vis-à-vis du siège de détente 552.

Le clapet de décharge 571 est mobile relativement au siège de décharge 521 entre :
- une position amont de fermeture de la communication entre la chambre basse pression 513 et la chambre intermédiaire 524 (via le canal interne 520), dans lequel le clapet de décharge 571 est en butée sur le siège de décharge 521 ; et
- une position aval d'ouverture de la communication entre la chambre basse pression 513 et la chambre intermédiaire 524 (via le canal interne 520), dans lequel le clapet de décharge 571 est décollé vis-à-vis du siège de décharge 521.

Ce premier détendeur 5 comprend également un premier organe de rappel 58, en l'occurrence un ressort hélicoïdal, comprimé entre le piston 52 et le corps amont 53 et sollicitant le piston 52 en direction du corps aval 51 (autrement dit dans le sens d'un plaquage du piston 52 contre le corps aval 51).

Ce premier détendeur 5 comprend également un second organe de rappel 59, en l'occurrence un ressort hélicoïdal, comprimé entre le piston 52 et un plateau 573 solidaire de la tige de soupape 57. Ce second organe de rappel 59 s'étend à l'intérieur du premier organe de rappel 58, et le plateau 573 peut par exemple être formé d'un circlips serré autour de la tige de soupape 57. Ce second organe de rappel 59 sollicite la tige de soupape 57, relativement au piston 52, dans le sens d'un plaquage du clapet de décharge 571 contre le siège de décharge 521, autrement dit dans le sens du clapet de décharge 571 vers la position amont de fermeture.

La description qui suit porte sur le fonctionnement du premier détendeur 5.

En référence à la figure 21, dans une configuration de repos, c'est-à-dire en l'absence de pression en entrée (vanne 40 fermée) et en sortie du premier détendeur 5 :
- le piston 52 est en butée sur la face inférieure du corps aval 51 sous l'action du premier organe de rappel 58,
- le clapet de décharge 571 est en en position amont de fermeture sous l'action du second organe de rappel 59, et
- le clapet de régulation 572 est en position aval d'ouverture, de sorte que le premier détenteur 5 est ouvert.

En référence à la figure 21, dans une configuration de régulation, c'est-à-dire avec la présence d'une pression haute en entrée (vanne 40 ouverte) à réguler pour délivrer une pression réduite en sortie :
- le clapet de régulation 572 est en position aval d'ouverture et la détente s'effectue au niveau du siège de détente 552, le gaz passant dans le canal interne 570 de la tige de soupape 57 pour atteindre la chambre basse pression 513 ;
- la pression dans la chambre basse pression 513 agit sur le piston 52 dans le sens d'un décollement vis-à-vis du corps aval 51, de sorte que la régulation s'établit dans le premier détendeur 5 ; et
- le clapet de décharge 571 est en en position amont de fermeture sous l'action du second organe de rappel 59

En référence à la figure 22, dans une configuration fermée de décharge en cas de surpression dans la chambre basse pression 513, c'est-à-dire dans le cas où la pression aval (ou pression dans la chambre basse pression 513) dépasse une première pression seuil prédéfinie (qui dépend des surfaces d'appui du gaz et des coefficients de rappel des organes de rappel 58, 59) :
- la surpression dans la chambre basse pression 513 agit sur le piston 52 dans le sens d'un décollement vis-à-vis du corps aval 51 suffisant pour que le clapet de régulation 572 soit en position amont de fermeture, sous l'effet du second organe de rappel 59 qui pousse la tige de soupape 57 ;
- la tige de soupape 57 étant en butée sur le siège de détente 552 et le piston 52 étant suffisamment écarté du corps aval 51, le clapet de décharge 571 décolle du siège de décharge 521 et passe ainsi en position aval d'ouverture, autorisant la communication entre la chambre basse pression 513 et la conduite de décharge 14 raccordée au circuit de fuite 10, et ainsi la décharge s'effectue dans le circuit de fuite 10 et la pression aval est relâchée.

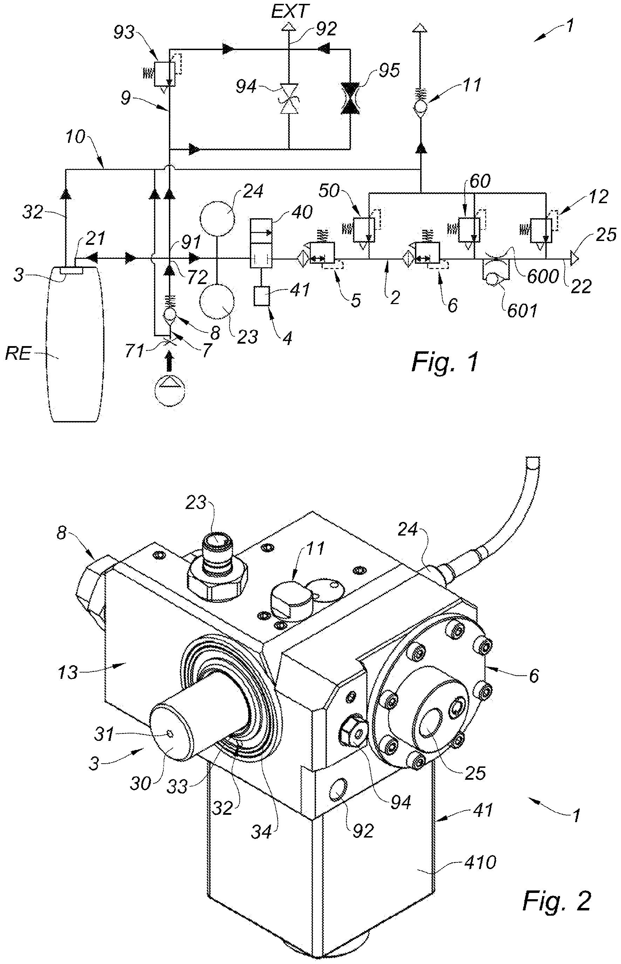

Dans ce premier détendeur 5, le clapet de décharge 571 et le second organe de rappel 59 forment ensemble la soupape de décharge 50 évoquée précédemment en référence à la figure 1.

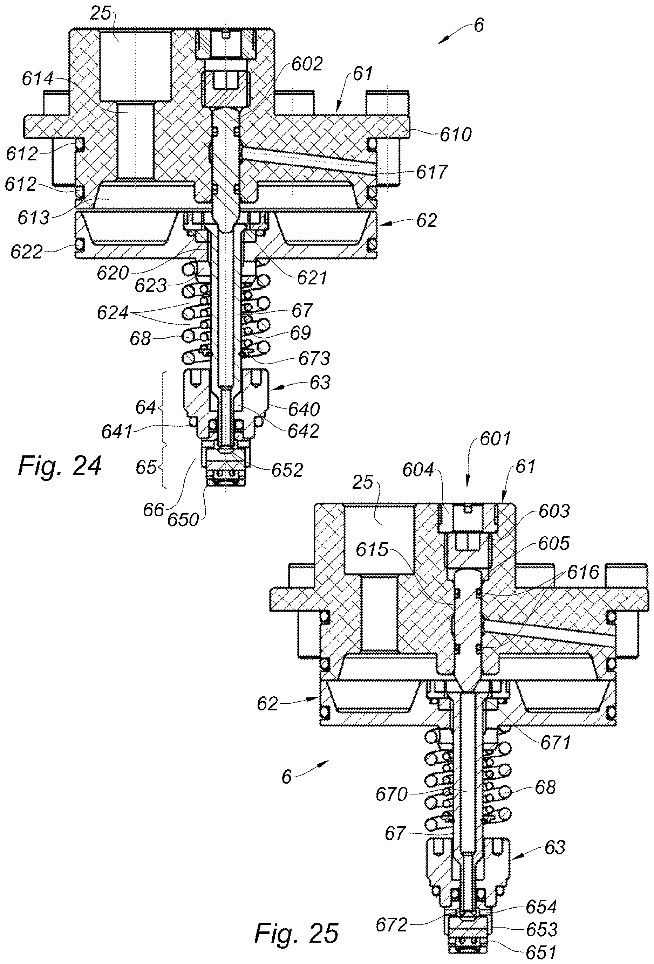

Le second détendeur 6 est décrit ci-après en référence aux figures 24 à 28, où ce second détendeur 6 est monté à l'intérieur d'un alésage dont le fond est en communication avec la sortie du premier détendeur 5.

Ce second détendeur 6 comprend un corps aval 61 statique formant un couvercle ou bouchon accessible de l'extérieur et muni d'un palier périphérique 610 pour une fixation au moyen de plusieurs vis sur le corps 13, ce corps aval 61 présentant :
- en périphérie extérieure, deux joints d'étanchéité 612 toriques en-dessous du palier périphérique 610,
- sur une face supérieure (ou externe), un orifice taraudé formant le raccord de soutirage 25 (raccord femelle) à l'extrémité aval 22 du circuit de soutirage 2 ; et
- sur une face inférieure opposée à la face supérieure, une cavité formant une chambre basse pression 613 en sortie du second détendeur 6, cette chambre basse pression 613 étant reliée au raccord de soutirage 25 via une conduite intérieure 614.

Une conduite de fuite 18 (visible sur la figure 10) ménagée dans le corps 13 est raccordée au circuit de fuite 10 et débouche dans l'alésage du second détendeur 6 entre les deux joints d'étanchéité 612, avec à nouveau une double barrière d'étanchéité.

Ce second détendeur 6 comprend une pièce de régulation formée d'un piston 62 mobile conformé pour venir en appui sur la face inférieure du corps aval 61, ce piston 62 étant muni en périphérie extérieure d'un joint d'étanchéité 622 torique, et présentant un canal interne 620 traversant ayant :
- une extrémité supérieure, du côté du corps aval 61, faisant face à la chambre basse pression 613 et formant un siège de décharge 621, et
- une extrémité inférieure 623 opposée qui débouche sur une chambre intermédiaire 624.

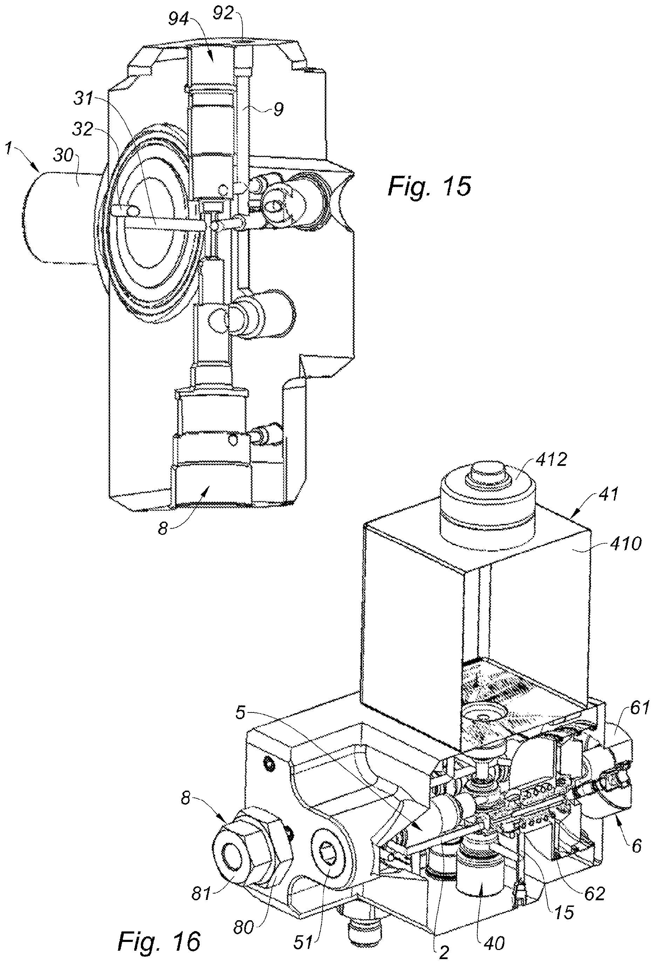

Ce second détendeur 6 comprend un corps amont 63 statique présentant une portion supérieure 64 prolongée par une portion inférieure 65, où la portion supérieure 64 fait face au piston 62 de sorte que la chambre intermédiaire 624 est délimitée entre le piston 62 et la portion supérieure 64 du corps amont 63. La chambre intermédiaire 624 est reliée au circuit de fuite 10 ou au circuit de sécurité 9, via une conduite de décharge 15 ménagée dans le corps 13 et visible sur les figures 16 et 18.

La portion supérieure 64 est munie d'un filetage externe 640 pour une fixation par vissage dans le corps 13, et plus spécifiquement une fixation au fond de l'alésage correspondant, jusqu'à ce que cette portion supérieure 64 soit en butée sur un épaulement interne de l'alésage via un joint d'étanchéité 641.

Le corps amont 63 délimite avec le fond de l'alésage, sous l'épaulement interne, une chambre haute pression 66 en entrée du second détendeur 6, cette chambre haute pression 66 étant reliée à la sortie du premier détendeur 5, autrement dit à la chambre basse pression 513 de ce premier détendeur 5.

La portion supérieure 64 présente un canal interne 642 traversant ayant une extrémité supérieure qui débouche sur la chambre intermédiaire 624 et une extrémité inférieure qui débouche sur la chambre haute pression 66.

La portion inférieure 65 présente une coupole inférieure 650 en appui sur le fond de l'alésage pour une entrée EN du gaz sous haute pression, où cette coupole inférieure 650 est muni de trous latéraux 651 débouchant dans la chambre haute pression 66.

La coupole inférieure 650 présente une face supérieure en regard de l'extrémité inférieure du canal interne 642, et une cavité est formée dans cette face supérieure pour former un siège de détente 652.

La portion inférieure 65 comprend une paroi cylindrique 653 qui entoure la face supérieure de la coupole inférieure 650, où cette paroi cylindrique 653 est munie de trous latéraux 654 débouchant dans la chambre haute pression 66.

Ainsi, en entrée, le gaz entre à l'intérieur de la coupole inférieure 650, puis le gaz sort dans la chambre haute pression 66 par les trous latéraux 651 et entre au niveau du siège de détente 652 par les trous latéraux 654. Ce cheminement du gaz participe avantageusement à la fonction de détente du gaz recherchée.

Ce second détendeur 6 comprend une tige de soupape 67 tubulaire munie d'un canal interne 670, la tige de soupape 67 traversant à la fois le canal interne 620 du piston 62 et le canal interne 642 de la portion supérieure 64 du corps amont 63, de sorte que cette tige de soupape 67 présente :
- une extrémité supérieure évasée formant un clapet de décharge 671 propre à venir en appui sur le siège de décharge 621 (autrement dit sur l'extrémité supérieure du canal interne 620) ; et
- une extrémité inférieure formant un clapet de régulation 672 propre à venir en appui sur le siège de détente 652.

Le clapet de régulation 672 est mobile relativement au siège de détente 652 entre :
- une position amont de fermeture de la communication entre la chambre basse pression 613 et la chambre haute pression 66 (via le canal interne 670), dans lequel le clapet de régulation 672 est en butée sur le siège de détente 652 ; et
- une position aval d'ouverture de la communication entre la chambre basse pression 613 et la chambre haute pression 66 (via le canal interne 670), dans lequel le clapet de régulation 672 est décollé vis-à-vis du siège de détente 652.

Le clapet de décharge 671 est mobile relativement au siège de décharge 621 entre :
- une position amont de fermeture de la communication entre la chambre basse pression 613 et la chambre intermédiaire 624 (via le canal interne 620), dans lequel le clapet de décharge 671 est en butée sur le siège de décharge 621 ; et
- une position aval d'ouverture de la communication entre la chambre basse pression 613 et la chambre intermédiaire 624 (via le canal interne 620), dans lequel le clapet de décharge 671 est décollé vis-à-vis du siège de décharge 621.

Ce second détendeur 6 comprend également un premier organe de rappel 68, en l'occurrence un ressort hélicoïdal, comprimé entre le piston 62 et le corps amont 63 et sollicitant le piston 62 en direction du corps aval 61 (autrement dit dans le sens d'un plaquage du piston 62 contre le corps aval 61).

Ce second détendeur 6 comprend également un second organe de rappel 69, en l'occurrence un ressort hélicoïdal, comprimé entre le piston 62 et un plateau 673 solidaire de la tige de soupape 67. Ce second organe de rappel 69 s'étend à l'intérieur du premier organe de rappel 68, et le plateau 673 peut par exemple être formé d'un circlips serré autour de la tige de soupape 67. Ce second organe de rappel 69 sollicite la tige de soupape 67, relativement au piston 62, dans le sens d'un plaquage du clapet de décharge 671 contre le siège de décharge 621, autrement dit dans le sens du clapet de décharge 671 vers la position amont de fermeture.

Ce second détendeur 6 est ainsi relativement proche du premier détendeur décrit précédemment, avec une première différence qui réside dans une différence dans les dimensionnements car la pression en amont du second détendeur 6 correspond à la pression en aval du premier détendeur 5, autrement dit à la pression détendue par ce premier détendeur 5.

Le premier détendeur 5 a pour fonction de détendre une haute pression, notamment de l'ordre de 350 à 700 bars, afin de délivrer en sortie une moyenne pression, notamment de l'ordre de 10 à 30 bars, et le second détendeur 6 a pour fonction de détendre cette moyenne pression, notamment de l'ordre de 10 à 30 bars, afin de délivrer en sortie une faible pression, notamment de l'ordre de 0,5 à 5 bars.

Ainsi, le piston 62 du second détendeur 6 présente une face supérieure dont la superficie est supérieure à celle du piston 52 du premier détendeur 5. Les organes de rappel 68, 69 présentent également des coefficients de rappel différents de ceux des organes de rappel 58, 59.

Une seconde différence est que le second détendeur 6 comprend un système de sécurité 601, avec réarmement manuel, en cas de chute de pression dans la chambre basse pression 613 (équivalent à un sur-débit en sortie du second détendeur 6) qui traduirait une fuite en aval, et en particulier une fuite dans l'organe de soutirage.

Un tel système de sécurité 601 présente les fonctions suivantes :
- obturer la communication entre la chambre basse pression 613 et la chambre haute pression 66 dans le cas où la pression aval (pression dans la chambre basse pression 613) passe en-dessous d'une pression seuil basse PSB (ou valeur de consigne) ;
- interdire une remise en fonctionnement du second détendeur 6 tant que le défaut de chute de pression (ou de fuite dans l'organe de soutirage) n'est pas résolu ;
- permettre une remise en fonctionnement du second détendeur 6 uniquement par un réarmement manuel, une fois résolu le défaut de chute de pression (ou de fuite dans l'organe de soutirage).

La pression seuil basse PSB peut être établie en considérant une valeur maximale QM de débit du gaz en sortie du second détendeur 6 qui est considérée comme un seuil haut à ne pas dépasser pour le débit car traduisant un dysfonctionnement au niveau de l'organe de soutirage pouvant correspondre à une fuite. Cette valeur maximale QM est ensuite à rapprocher d'une différence entre la pression nominale en sortie du second détendeur 6 (qui correspond à la pression d'utilisation par l'organe de soutirage) et la pression seuil basse PSB.

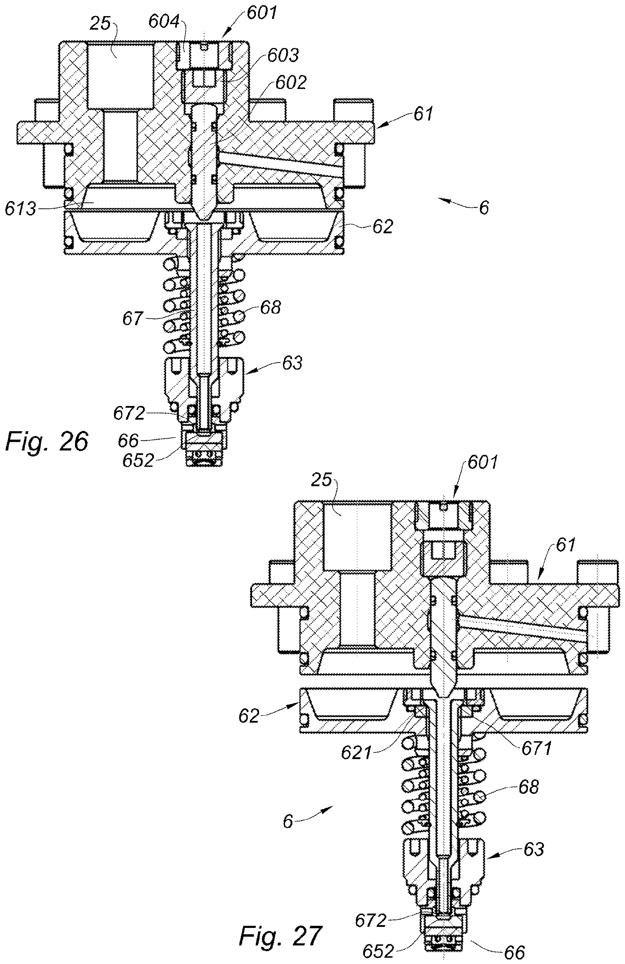

Ce système de sécurité 601 comprend un doigt obturateur 602 monté mobile dans le corps aval 61 en regard de l'extrémité supérieure ouverte de la tige de soupape 67, où ce doigt obturateur 602 est déplaçable sélectivement entre :
- une position abaissée (visible sur les figures 24 et 27) dans laquelle le doigt obturateur 602 est rapproché de l'extrémité supérieure ouverte de la tige de soupape 67 et est ainsi apte à boucher cette extrémité supérieure pour fermer la communication entre la chambre basse pression 613 et la chambre haute pression 66 ; et
- une position relevée (visible sur les figures 25 et 26) dans laquelle le doigt obturateur 602 est éloigné de l'extrémité supérieure ouverte de la tige de soupape 67.

Ce doigt obturateur 602 est monté coulissant dans un orifice 615 ménagé traversant dans le corps aval 61, avec interposition de deux joints d'étanchéité 616 toriques ; une conduite de fuite 617 raccordée au circuit de fuite 10 est ménagée dans le corps aval 61 en débouchant dans l'orifice 615 entre les deux joints d'étanchéité 616.

Ce système de sécurité 601 comprend une vis de réglage 603 vissée dans un filetage prévu dans l'orifice 615, au-dessus du doigt obturateur 602, cette vis de réglage 603 étant accessible de l'extérieur pour permettre de déplacer sélectivement le doigt obturateur 602 en vissant/dévissant la vis de réglage 603 qui vient en butée sur le doigt obturateur 602.

Ce système de sécurité 601 comprend une vis d'arrêt 604 qui est également vissée dans un filetage prévu dans l'orifice 615, au-dessus de la vis de réglage 603. Cette vis d'arrêt 604 est creuse, pour permettre d'accéder avec un outil adéquat à la vis de réglage 603, et cette vis d'arrêt 604 forme une butée haute d'arrêt pour la vis de réglage 603 ; une butée basse d'arrêt pour la vis de réglage 603 étant formée par un épaulement interne 605 dans l'orifice 615.

La description qui suit porte sur le fonctionnement du second détendeur 6.

La figure 24 illustre une configuration de départ, qui correspond à une configuration verrouillée interdisant la régulation pour le second détendeur 6, avec le système de sécurité 601 en mode fermé. Cette configuration de départ correspond à une configuration à la mise en route (ou au démarrage) du dispositif 1, et également à une configuration après que le système de sécurité 601 se soit fermé automatiquement suite à chute de pression aval en-dessous de la pression seuil basse.

Dans cette configuration de départ :
- la vis de réglage 603 est sur sa butée basse d'arrêt 605, de sorte que le doigt obturateur 602 est en position abaissée ;
- le piston 62 est remonté en direction de la face inférieure du corps aval 61 sous l'action du premier organe de rappel 68, remontant ainsi la tige de soupape 67 de sorte que l'extrémité supérieure ouverte de cette tige de soupape 67 vient en appui contre le doigt obturateur 602 qui bouche alors le canal interne 670 au niveau de cette extrémité supérieure, fermant ainsi la communication entre la chambre basse pression 613 et la chambre haute pression 66.

Dans cette configuration de départ, si une pression amont (en entrée du second détendeur 6) est présente, le système de sécurité 601 restera fermé et le second détendeur 6 restera fermé, et seul un réarmement automatiquement permettra de remettre en fonctionnement ce second détendeur 6.

La figure 25 illustre une configuration déverrouillée en première phase de réarmement, dans laquelle :
- la vis de réglage 603 est remontée en butée sur la vis d'arrêt 604 ;
- le piston 62 est remonté jusqu'à venir en butée sur la face inférieure du corps aval 61 sous l'action du premier organe de rappel 68, exerçant ainsi une poussée sur le doigt obturateur 602 qui est libre de remonter en direction de sa position relevée (sans nécessairement atteindre complètement sa position relevée) ;
- la liaison avec l'organe de soutirage au niveau du raccord de soutirage 25 est fermée, afin qu'une pression aval (pression dans la chambre basse pression 613) puisse s'établir.

La figure 26 illustre une configuration déverrouillée en seconde phase de réarmement, dans laquelle :
- une pression amont (en entrée du second détendeur 6 ou pression dans la chambre haute pression 66) est appliquée (notamment après ouverture de la vanne 40) ;
- sous l'effet de cette pression amont, le doigt obturateur 602 est poussé vers sa position relevée de sorte que le doigt obturateur 602 n'est plus en butée sur l'extrémité supérieure ouverte de la tige de soupape 67, et que la communication est rétablie entre la chambre basse pression 613 et la chambre haute pression 66 ;
- le clapet de régulation 672 est en position aval d'ouverture et la détente s'effectue au niveau du siège de détente 652, le gaz passant dans le canal interne 670 de la tige de soupape 67 pour atteindre la chambre basse pression 613 ;
- la pression dans la chambre basse pression 613 agit sur le piston 62 dans le sens d'un décollement vis-à-vis du corps aval 61, de sorte que la régulation s'établit dans le second détendeur 6 ; et
- le clapet de décharge 671 est en en position amont de fermeture sous l'action du second organe de rappel 69.

La figure 27 illustre une configuration ouverte de régulation, dans laquelle :
- la liaison avec l'organe de soutirage au niveau du raccord de soutirage 25 est ouverte ;
- la vis de réglage 603 est descendue sur sa butée basse d'arrêt 605, de sorte que le doigt obturateur 602 est amené en position abaissée ;
- sous l'effet de la pression aval (dans la chambre basse pression 613), le piston 62 est suffisamment éloigné du corps aval 61 pour que le doigt obturateur 602 ne vienne pas en butée sur l'extrémité supérieure ouverte de la tige de soupape 67, en effet l'écart de jeu entre la course de la vis de réglage 603 et la course du piston 62 est prévu pour que le doigt obturateur 602 ne bouche pas cette extrémité supérieure ouverte de la tige de soupape 67 dans la configuration ouverte de régulation.

Si la pression aval (pression dans la chambre basse pression 613) passe en-dessous d'une pression seuil basse (traduisant pour rappel un surdébit en sortie et donc une fuite en aval), le piston 62 remonte (sous l'effet du premier organe de rappel 68) jusqu'à ce que le doigt obturateur 602 vienne en butée sur l'extrémité supérieure ouverte de la tige de soupape 67, et le second détendeur 6 retourne dans la configuration de départ de la figure 24.

Si la pression aval (pression dans la chambre basse pression 613) dépasse une seconde pression seuil prédéfinie (qui dépend des surfaces d'appui du gaz et des coefficients de rappel des organes de rappel 68, 69), alors le fonctionnement est similaire à celui du premier détendeur 5, à savoir que :
- la surpression dans la chambre basse pression 613 agit sur le piston 62 dans le sens d'un décollement vis-à-vis du corps aval 61 suffisant pour que le clapet de régulation 672 soit en position amont de fermeture, sous l'effet du second organe de rappel 69 qui pousse la tige de soupape 67 ;
- la tige de soupape 67 étant en butée sur le siège de détente 652 et le piston 62 étant suffisamment écarté du corps aval 61, le clapet de décharge 671 décolle du siège de décharge 621 et passe ainsi en position aval d'ouverture, autorisant la communication entre la chambre basse pression 613 et la conduite de décharge 15 raccordée au circuit de fuite 10, et ainsi la décharge s'effectue dans le circuit de fuite 10 et la pression aval est relâchée.

Dans ce second détendeur 6, le clapet de décharge 671, le siège de décharge 671 et le second organe de rappel 69 forment ensemble la soupape de décharge 60 évoquée précédemment en référence à la figure 1.

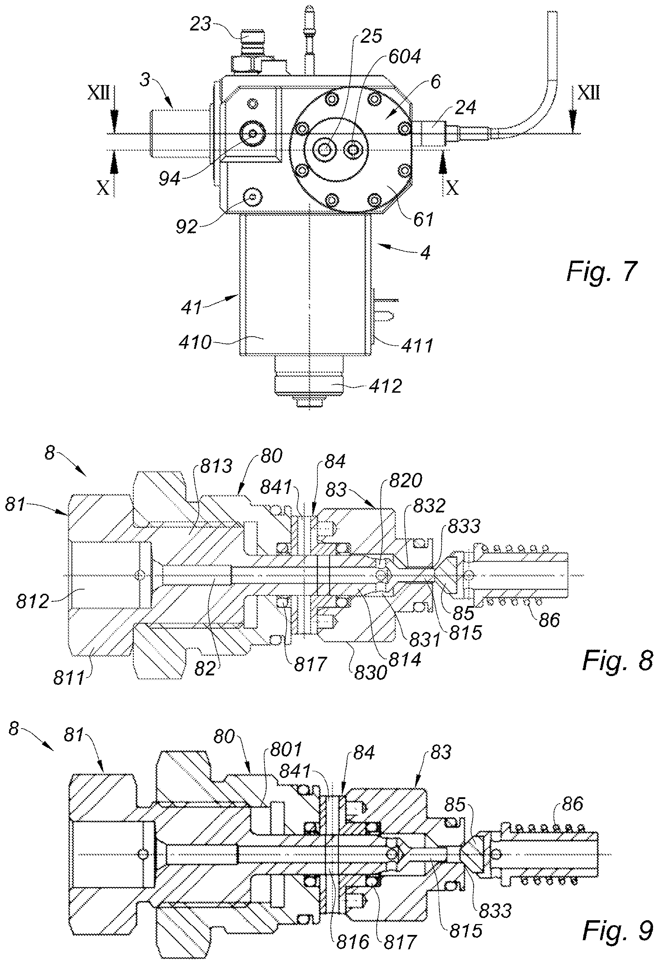

Le raccord de remplissage 8 est décrit ci-après en référence aux figures 8 et 9.

Ce raccord de remplissage 8 comprend un corps amont 80 creux statique formant un couvercle ou bouchon accessible de l'extérieur et muni d'un filetage externe 800 pour une fixation par vissage dans le corps 13, ce corps 80 creux présentant un filetage interne 801 prolongé par un trou central 802.

Ce raccord de remplissage 8 comprend un piston 81 vissé dans le filetage interne 801 du corps amont 80 et présentant intérieurement une conduite de remplissage 82.

Ce piston 81 présente successivement :
- une portion de préhension 811 permettant une saisie manuelle ou avec un outillage adéquat, afin de visser/dévisser le piston 81, et dans laquelle est prévue une prise femelle 812, en communication avec la conduite de remplissage 82, prévue pour une liaison avec une prise mâle de la source de gaz sa ;
- une portion filetée 813 vissée dans le filetage interne 801 du corps amont 80 ;
- une portion lisse 814 ; et
- une portion d'extrémité 815 formant un doigt de poussée.

La conduite de remplissage 82 débouche au bout de la portion lisse 814, avant la portion d'extrémité 814, via des trous périphériques 820.

Cette portion lisse 814 présente également au moins un orifice de purge 816 débouchant transversalement dans la conduite de remplissage 82, à distance des trous périphériques 820.

Ce raccord de remplissage 8 comprend un corps aval 83 statique muni d'un filetage externe 830 pour une fixation par vissage dans le corps 13, et plus spécifiquement une fixation au fond de l'alésage correspondant, jusqu'à ce que ce corps aval 83 soit en butée sur un épaulement interne de l'alésage.

Ce corps aval 83 présente un canal interne ayant successivement :
- une partie amont 831 élargie à l'intérieur de laquelle débouche la conduite de remplissage 82 via les trous périphériques 820 ; et
- une partie aval 832 rétrécie traversée par la portion d'extrémité 815, cette partie aval 832 ayant une extrémité aval formant un siège 833.

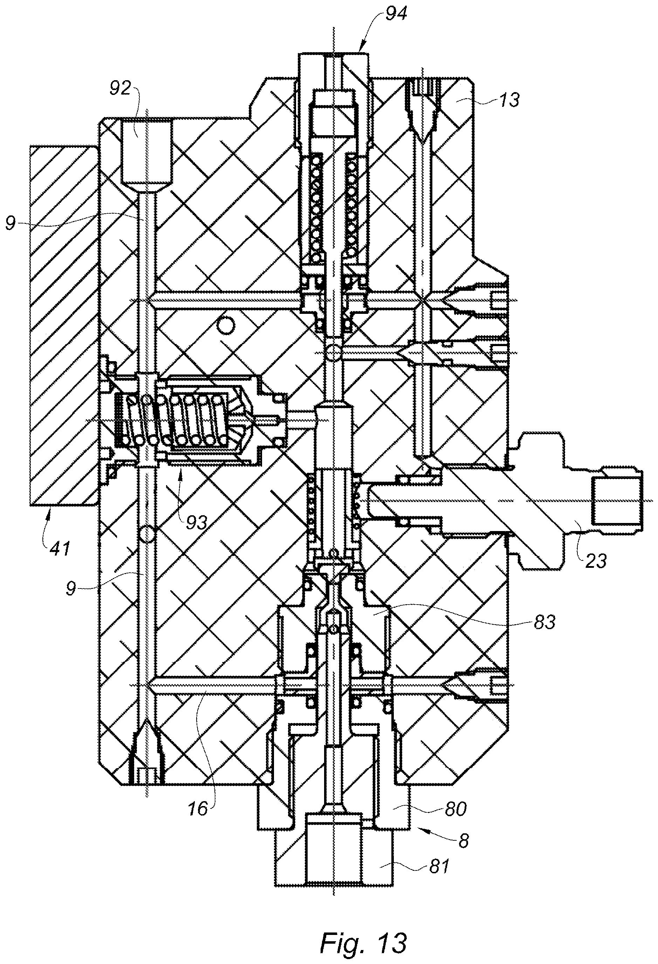

Ce raccord de remplissage 8 comprend un corps de purge 84 intercalé entre le corps amont 80 et le corps aval 83 et présentant au moins une conduite de purge 841 raccordée au circuit de fuite 10 ou au circuit de sécurité 9 via une canalisation de purge 16 ménagée dans le corps 13 et visible sur la figure 13. Cette conduite de purge 841 débouche en périphérie de la portion lisse 814 du piston 81, entre deux joints d'étanchéité 817 montés autour de cette portion lisse 814 dans le corps amont 80 et le corps aval 83 respectivement.

Ce raccord de remplissage 8 comprend en outre un clapet d'isolement 85 mobile relativement au siège 833, à l'intérieur de l'alésage du corps 13, entre :
- une position amont de fermeture de la conduite de remplissage 82 (visible sur la figure 9) où le clapet d'isolement 85 est en appui sur le siège 833, coupant ainsi la communication entre la conduite de remplissage 82 et l'extrémité amont 72 du circuit de remplissage 7 ;
- une position aval d'ouverture de la conduite de remplissage 82 (visible sur la figure 8) où le clapet d'isolement 85 est décollé vis-à-vis du siège 833, établissant ainsi la communication entre la conduite de remplissage 82 et l'extrémité amont 72 du circuit de remplissage 7.

Ce raccord de remplissage 8 comprend également un organe de rappel 86, notamment du type ressort hélicoïdal, qui sollicite le clapet d'isolement 85 en direction de la position amont de fermeture.

Le piston 81 est déplaçable par vissage/dévissage sélectivement entre une position d'ouverture (illustrée sur la figure 8) et une position de fermeture (illustrée sur la figure 9).

De manière générale, le piston 81 est déplaçable par toute action mécanique garantissant un déplacement en translation du piston entre sa position d'ouverture et sa position de fermeture, où le piston 81 reste connecté de manière étanche dans le corps amont 80. A titre d'exemple de variante, le piston 81 peut être déplaçable avec un mécanisme à quart de tour ou autre mécanisme équivalent.

Dans la position d'ouverture :
- le piston 81 est vissé vers l'aval de sorte que la portion d'extrémité 815 exerce une poussée sur le clapet d'isolement 85, à l'encontre de l'organe de rappel 86, vers sa position d'ouverture ; et
- l'orifice de purge 816 prévu sur le piston 81 ne coïncide pas avec la conduite de purge 841 prévue sur le corps de purge 84.

Dans la position de fermeture :
- le piston 81 est dévissé vers l'amont de sorte que la portion d'extrémité 815 est éloignée du clapet d'isolement 85 qui est sollicité par l'organe de rappel 86 vers sa position de fermeture ; et
- l'orifice de purge 816 prévu sur le piston 81 coïncide avec la conduite de purge 841 prévue sur le corps de purge 84 pour établir une communication entre la conduite de remplissage 82 et le circuit de fuite 10 ou le circuit de sécurité 9.

Ainsi, en fonctionnement, le piston 81 est dans sa position de fermeture et la source de gaz SO est connectée à la prise femelle 812, puis le piston 81 est vissé vers sa position d'ouverture et la source de gaz SO est ouverte pour remplir le récipient de stockage RE.

A la fin du remplissage, la source de gaz SO est fermée, le piston 81 est dévissé vers sa position de fermeture de sorte qu'intervient une dépressurisation automatique de la conduite de remplissage 82 à travers l'orifice de purge 816 vers le circuit de fuite 10 ou le circuit de sécurité 9, et enfin la source de gaz SO est déconnectée de la prise femelle 812.

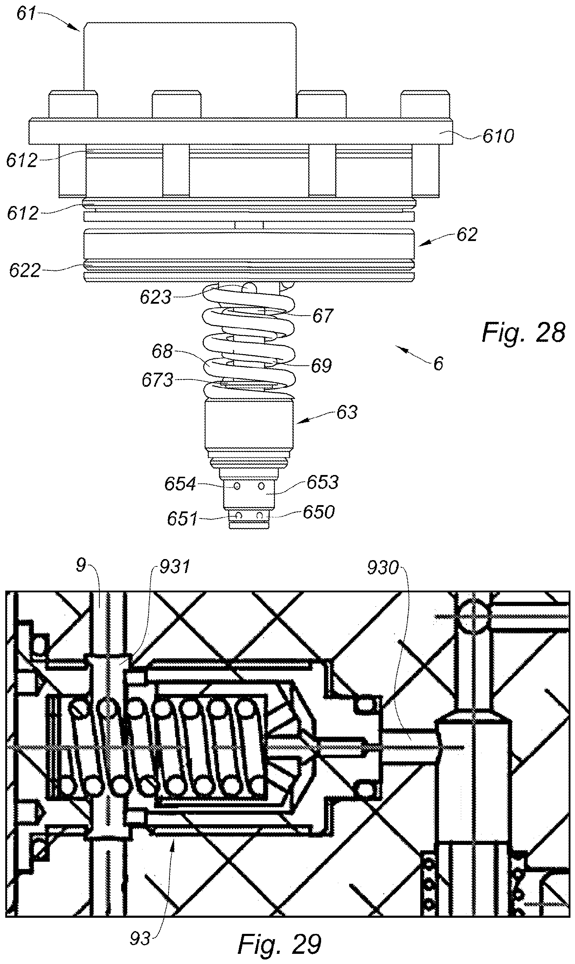

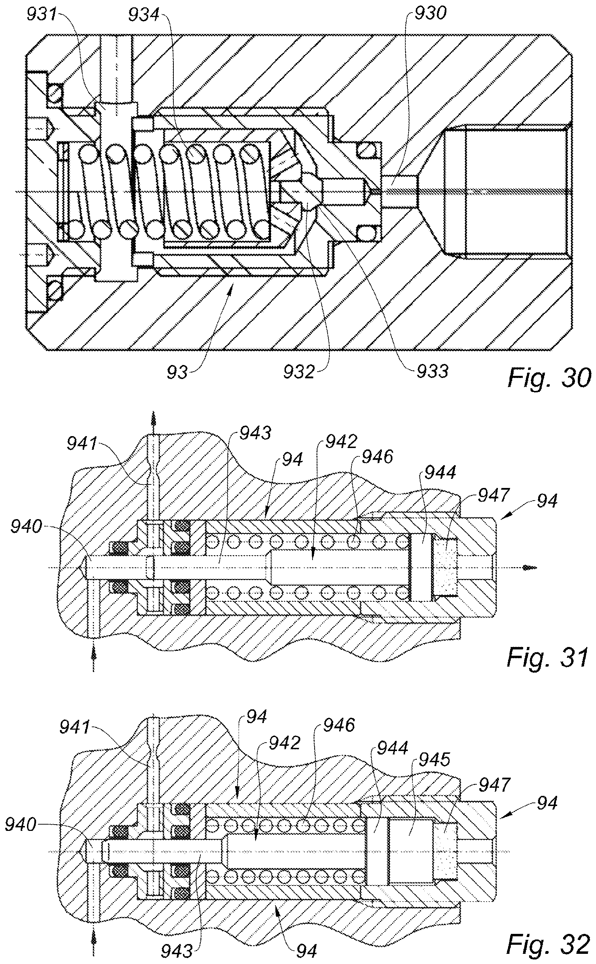

En référence aux figures 29 et 30, la soupape de sécurité haute pression 93 présente :
- une entrée 930 raccordée à l'extrémité amont 21 du circuit de soutirage 2, autrement dit raccordée à la sortie du raccord de remplissage 8 et à la conduite principale 31 du raccord de stockage 3 ;
- une sortie 931 raccordée à l'extrémité amont 92 du circuit de fuite 9 (ou point de collecte sur l'extérieur).

La soupape de sécurité haute pression 93 comprend un clapet 932 en appui sur un siège 933 ouvert sur l'entrée, sous l'effet d'un organe de rappel 934.

Si la pression à l'entrée 930 dépasse une valeur seuil supérieure à la pression maximale prévue dans le récipient de stockage RE (valeur seuil par exemple de l'ordre de 730 à 780 bars), le clapet 932 s'ouvre sous l'effet de cette pression élevée et met en communication l'entrée 930 et la sortie 931. Cette soupape de sécurité haute pression 93 a ainsi pour fonction d'évacuer vers l'extérieur le gaz en cas de pression excessive dans le dispositif 1.

En référence aux figures 31 et 32, la soupape de sécurité haute température 94 présente :
- une entrée 940 raccordée à l'extrémité amont 21 du circuit de soutirage 2, autrement dit raccordée à la sortie du raccord de remplissage 8 et à la conduite principale 31 du raccord de stockage 3 ;
- une sortie 941 raccordée à l'extrémité amont 92 du circuit de fuite 9 (ou point de collecte sur l'extérieur), cette sortie 93 étant munie d'un rétrécissement formant un orifice calibré de limitation du débit.

La soupape de sécurité haute température 94 comporte un piston 942 munie d'une tige 943 qui coupe la communication entre l'entrée 940 et la sortie 941, et une embase 944 en appui sur une pastille fusible thermiquement 945, elle-même en appui sur un écran en métal fritté 947.

Un organe de rappel 946 prend appui sur l'embase 944 pour solliciter le piston 942 contre la pastille fusible thermiquement 945.

Comme visible sur la figure 32, si la température est inférieure à une valeur seuil (par exemple de l'ordre de 90 et 120 °C), la pastille fusible thermiquement 945 n'est pas fondue et la tige 943 coupe la communication entre l'entrée 940 et la sortie 941, de sorte que la soupape de sécurité haute température 94 est fermée.

Comme visible sur la figure 31, si la température est supérieure à la valeur seuil, la pastille fusible thermiquement 945 est fondue et la tige 943 est sollicitée par l'organe de rappel 946 et/ou par la pression en entrée 940, dans le sens d'une ouverture de la communication entre l'entrée 940 et la sortie 941, de sorte que la soupape de sécurité haute température 94 est ouverte.

En référence à la figure 19, la soupape de sécurité basse pression 12 présente :
- une entrée 120 raccordée à l'extrémité aval 22 du circuit de soutirage 2 ; et
- une sortie 121 d'échappement raccordée au circuit de fuite 10 en amont du clapet anti-retour 11.

La soupape de sécurité basse pression 12 comprend un clapet 122 en appui sur un siège 123 ouvert sur l'entrée 120, sous l'effet d'un organe de rappel 124. Si la pression à l'entrée 120 dépasse une valeur seuil supérieure à la pression maximale prévue dans l'organe de soutirage (valeur seuil par exemple de l'ordre de 2 à 5 bars), le clapet 122 s'ouvre sous l'effet de cette pression et met en communication l'entrée 120 et la sortie 121. Cette soupape de sécurité basse pression 12 a ainsi pour fonction d'évacuer vers l'extérieur le gaz en cas de pression excessive dans l'organe de soutirage.

Il est à noter que le dispositif 1 peut se passer de cette soupape de sécurité basse pression 12 si celle-ci est redondante avec une soupape de sécurité intégrée à l'organe de soutirage. Bien entendu, si l'organe de soutirage a sa propre soupape de sécurité, la soupape de sécurité basse pression 12 peut tout de même est présente dans le dispositif 1.

Le dispositif 1 décrit ci-dessus présente ainsi de nombreux avantages en termes de :
- qualité et précision de la régulation, grâce à deux détendeurs 5, 6 en série qui permettent une détente sur deux étages ;
- sécurité en cas de dysfonctionnements ou d'incidents, grâce notamment aux soupapes de décharge 50, 60 intégrées dans les détendeurs 5, 6, au système de sécurité 601 et aux autres systèmes de sécurité dont la soupape de sécurité haute pression 93 et la soupape de sécurité haute température 94 ;

- sécurité lors des opérations de remplissage grâce au raccord de remplissage 8 qui intègre une fonction de dépressurisation (ou purge) automatique lors du désaccouplement entre le raccord de remplissage et la source de gaz sous pression ;
- sécurité vis-à-vis des fuites grâce à un circuit de fuite 10 qui collecte les conduites de fuite, de décharge et de purge 14, 15, 16, 17, 18, 32, qui sont systématiquement encadrées par deux joints d'étanchéité formant des doubles barrières d'étanchéité particulièrement efficaces pour garantir une absence de fuite dans le dispositif 1 vers l'extérieur, l'amont et l'aval ;
- compacité et légèreté avec un corps 13 optimisé pour accueillir les nombreux organes dans des alésages adéquats et les nombreuses canalisations et conduites des différents circuits 2, 7, 9 et 10.

## Revendications

1. Détendeur (5; 6) comprenant :
- un corps aval (51; 61) statique délimitant une chambre basse pression (513; 613) en sortie du détendeur (5; 6) ;
- un corps amont (53; 63) délimitant une chambre haute pression (56; 66) en entrée du détendeur (5; 6) et portant un siège de détente (552; 652) disposé en regard d'un canal interne (542 ; 642) ménagée dans une portion supérieure (54; 64) du corps amont (53; 63) ;
- un piston (52; 62) mobile formant une pièce de régulation sur laquelle appuie d'un côté le gaz de la chambre basse pression (513; 613) et de l'autre côté un premier organe de rappel (58; 68), ledit premier organe de rappel (58; 68) étant comprimé entre le piston (52; 62) et le corps amont (53; 63) en sollicitant le piston (52; 62) en direction du corps aval (51; 61) ;
- un clapet de régulation (572; 672) coopérant avec le piston (52 ; 62) et mobile relativement au siège de détente (552; 652) entre une position amont de fermeture d'une communication entre la chambre basse pression (513; 613) et la chambre haute pression (56; 66) et une position aval d'ouverture de la communication entre la chambre basse pression (513; 613) et la chambre haute pression (56; 66) ;
dans lequel le piston (52; 62) présente un canal interne (520 ; 620) traversant ayant deux extrémités opposées :
- une extrémité supérieure ouverte, du côté du corps aval (51; 61), faisant face à la chambre basse pression (513; 613), et
- une extrémité inférieure (523 ; 623) qui débouche sur une chambre intermédiaire (524; 624) intercalée entre le corps amont (53; 63) et le corps aval (51; 61);
et dans lequel le détendeur (5; 6) comprend en outre une tige de soupape (57; 67) tubulaire munie d'un canal interne (570 ; 670), la tige de soupape (57; 67) traversant à la fois le canal interne (520; 620) du piston (52; 62) et le canal interne (542 ; 642) de la portion supérieure (54; 64) du corps amont (53; 63), de sorte que cette tige de soupape (57; 67) présente :
- une extrémité supérieure ; et
- une extrémité inférieure formant le clapet de régulation (572; 672) propre à venir en appui sur le siège de détente (552; 652) ;
ledit détendeur (5; 6) étant **caractérisé en ce que** :
- la chambre intermédiaire (524; 624) est raccordée à un circuit de fuite (10) ;
- l'extrémité supérieure de la tige de soupape (57; 67) est évasée et forme un clapet de décharge (571; 671) propre à venir en appui sur un siège de décharge (521; 621) prévu à l'extrémité supérieure du canal interne (520; 620) du piston (52; 62) ; et
- un second organe de rappel (59; 69) est comprimé entre le piston (52; 62) et un plateau (573; 673) solidaire de la tige de soupape (57; 67) et sollicitant la tige de soupape (57; 67), relativement au piston (52; 62), dans le sens d'un plaquage du clapet de décharge (571; 671) contre le siège de décharge (521; 621).

2. Détendeur (5; 6) selon la revendication 1, dans lequel le second organe de rappel (59; 69) s'étend à l'intérieur du premier organe de rappel (58; 68).

3. Détendeur (5; 6) selon l'une quelconque des revendications 1 à 2, dans lequel le plateau (573; 673) est formé d'un circlips serré autour de la tige de soupape (57; 67).

4. Détendeur (5; 6) selon l'une quelconque des revendications 1 à 3, dans lequel la portion supérieure (54; 64) du corps amont (53; 63) est munie d'un filetage externe (540 ; 640) pour une fixation par vissage dans un alésage.

5. Détendeur (5; 6) selon l'une quelconque des revendications 1 à 4, dans lequel le corps amont (53; 63) présente la portion supérieure (54; 64) prolongée par une portion inférieure (55; 65), où la portion supérieure (54; 64) fait face au piston (52; 62), et ladite portion inférieure (55; 65) présente une coupole inférieure (550; 650) en appui sur le fond d'un alésage pour une entrée de gaz, où cette coupole inférieure (550; 650) est munie de trous latéraux (551 ; 651) débouchant dans la chambre haute pression (56; 66).

6. Détendeur (5; 6) selon la revendication 5, dans lequel la coupole inférieure (550; 650) présente une face supérieure en regard de l'extrémité inférieure du canal interne (542 ; 642) de la portion supérieure (54; 64) du corps amont (53; 63), et une cavité est formée dans cette face supérieure pour former le siège de détente (552; 652).

7. Détendeur (5; 6) selon l'une quelconque des revendications 5 et 6, dans lequel la portion inférieure (55; 65) du corps amont (53; 63) comprend une paroi cylindrique (553; 653) qui entoure la face supérieure de la coupole inférieure (550; 650), où cette paroi cylindrique (553; 653) est munie de trous latéraux (554 ; 654) débouchant dans la chambre haute pression (56; 66).

8. Détendeur (5; 6) selon l'une quelconque des revendications 1 à 7, dans lequel le corps aval (51; 61) forme un couvercle ou bouchon accessible de l'extérieur d'un corps (13).

9. Détendeur (5; 6) selon l'une quelconque des revendications 1 à 8, dans lequel le corps aval (51; 61) présente en périphérie extérieure deux joints d'étanchéité (512 ; 612) toriques à l'intérieur d'un alésage, et une conduite de fuite (17 ; 18) raccordée au circuit de fuite (10) débouche dans l'alésage entre les deux joints d'étanchéité (512 ; 612).

10. Détendeur (6) selon l'une quelconque des revendications 1 à 9, dans lequel le détendeur (6) comprend un système de sécurité (601) avec réarmement manuel conformé pour fermer automatiquement la communication entre la chambre basse pression (613) et la chambre haute pression (66) lorsque la pression aval dans la chambre basse pression (613) passe en-dessous d'une pression seuil basse prédéfinie correspondant à une augmentation du débit de gaz en sortie du détendeur (6), notamment associée à une fuite en aval.

11. Détendeur (6) selon la revendication 10, dans lequel le système de sécurité (601) comprend un doigt obturateur (602) monté mobile dans le corps aval (61) en regard de l'extrémité supérieure ouverte de la tige de soupape (67), où ce doigt obturateur (602) est déplaçable sélectivement entre :
- une position abaissée dans laquelle le doigt obturateur (602) est rapproché de l'extrémité supérieure ouverte de la tige de soupape (67) ; et
- une position relevée dans laquelle le doigt obturateur (602) est éloigné de l'extrémité supérieure ouverte de la tige de soupape (67).

12. Dispositif (1) de remplissage et de soutirage de gaz, comprenant :
- un circuit de soutirage (2) comprenant une extrémité amont (21) munie d'un raccord de stockage (3) conformé pour un raccordement avec un récipient de stockage (RE) d'un gaz sous pression, et une extrémité aval (22) munie d'un raccord de soutirage (25) conformé pour un raccordement avec un organe de soutirage du gaz à pression réduite, où ledit circuit de soutirage (2) comprend au moins une vanne d'isolation pilotée (4) et au moins un détendeur (5 ; 6) ;
- un circuit de remplissage (7) comprenant une extrémité amont (71) munie d'un raccord de remplissage (8) conformé pour un raccordement avec une source de gaz (SO) sous pression pour le remplissage du récipient de stockage (RE), et une extrémité aval (72) raccordée à l'extrémité amont (21) du circuit de soutirage (2) ;
ledit dispositif étant **caractérisé en ce que** le au moins un détendeur (5; 6) est conforme à l'une quelconque des revendications 1 à 11.

13. Dispositif (1) selon la revendication 12, dans lequel le circuit de soutirage (2) comprend un premier détendeur (5) et un second détendeur (6) en série, où chaque détendeur (5 ; 6) est conforme à l'une quelconque des revendications 1 à 11.

14. Dispositif (1) selon la revendication 13, dans lequel seul le second détendeur (6) est conforme à la revendication 10 ou 11.

15. Utilisation d'un dispositif (1) selon l'une quelconque des revendications 12 à 14, dans lequel le raccord de stockage (3) est raccordé à un récipient de stockage (RE) d'hydrogène gazeux sous pression et le raccord de soutirage (25) est raccordé à un organe de soutirage du type pile à combustible.

## Patentansprüche

1. Regler (5; 6), umfassend:
- Einen statischen stromabwärts gelegenen Körper (51; 61), der eine Niederdruckkammer (513; 613) am Ausgang des Reglers (5; 6) begrenzt;
- einen stromaufwärts gelegenen Körper (53; 63), der eine Hochdruckkammer (56; 66) am Eingang des Reglers (5; 6) begrenzt und einen Entspannungssitz (552; 652) trägt, der gegenüber einem inneren Kanal (542; 642) angeordnet ist, der in einem oberen Abschnitt (54; 64) des stromaufwärts gelegenen Körpers (53; 63) vorgesehen ist;
- einen beweglichen Kolben (52; 62), der ein Regulierteil bildet, auf das das Gas aus der Niederdruckkammer (513; 613) auf eine Seite und ein erstes Rückstellelement (58; 68) auf die andere Seite drückt, wobei das erste Rückstellelement (58; 68) zwischen dem Kolben (52; 62) und dem stromaufwärts gelegenen Körper (53; 63) zusammengedrückt wird, indem der Kolben (52; 62) in Richtung des stromabwärts gelegenen Körpers (51; 61) gespannt wird;
- ein Rückschlagventil (572; 672), das mit dem Kolben (52; 62) zusammenwirkt und relativ zum Expansionssitz (552; 652) zwischen einer stromaufwärts gelegenen geschlossenen Position einer Verbindung zwischen der Niederdruckkammer (513; 613) und der Hochdruckammer (56; 66) bewegbar ist und einer stromabwärts gelegenen offenen Position der Verbindung zwischen der Niederdruckkammer (513; 613) und der Hochdruckkammer (56; 66) beweglich ist;
wobei der Kolben (52; 62) einen durchgehenden inneren Kanal (520; 620) mit zwei gegenüberliegenden Enden aufweist:
- Ein offenes oberes Ende auf der Seite des stromabwärts gelegenen Körpers (51; 61), das der Niederdruckkammer (513; 613) zugewandt ist, und
- ein unteres Ende (523; 623), das zu einer Zwischenkammer (524; 624) führt, die zwischen dem stromaufwärts gelegenen Körper (53; 63) und dem stromabwärts gelegenen Körper (51; 61) eingefügt ist;
und wobei der Regler (5; 6) ferner einen rohrförmigen Ventilschaft (57; 67) umfasst, der mit einem inneren Kanal (570; 670) ausgestattet ist, wobei der Ventilschaft (57; 67) sowohl durch den inneren Kanal (520; 620) des Kolbens (52; 62) als auch durch den inneren Kanal (542; 642) des oberen Abschnitts (54; 64) des stromaufwärts gelegenen Körpers (53; 63) verläuft, so dass dieser Ventilschaft (57; 67) Folgendes aufweist:
- Ein oberes Ende; und
- ein unteres Ende, das das Rückschlagventil (572; 672) bildet, das dazu geeignet ist, auf dem Entspannungssitz (552; 652) zur Anlage zu kommen;
wobei der Regler (5; 6) **dadurch gekennzeichnet ist, dass**:
- Die Zwischenkammer (524; 624) an einen Leckagekreislauf (10) angeschlossen ist;
- das obere Ende des Ventilschafts (57; 67) erweitert ist und ein Entlastungsventil (571; 671) bildet, das dazu geeignet ist, auf einem Entlastungssitz (521; 621) zur Anlage zu kommen, der am oberen Ende des inneren Kanals (520, 620) des Kolbens (52; 62) vorgesehen ist; und
- ein zweites Rückstellelement (59; 69) zwischen dem Kolben (52; 62) und einer fest mit dem Ventilschaft (57; 67) verbundenen Platte (573; 673) zusammengedrückt wird und es den Ventilschaft (57; 67) relativ zum Kolben (52; 62) in der Richtung beansprucht, in der das Entlastungsventil (571; 671) gegen den Entlastungssitz (521; 621) gespannt wird.

2. Regler (5; 6) nach Anspruch 1, wobei das zweite Rückstellelement (59; 69) sich innerhalb des ersten Rückstellelements (58; 68) erstreckt.

3. Regler (5; 6) nach einem der Ansprüche 1 bis 2, wobei die Platte (573; 673) aus einem Sicherungsring gebildet wird, der eng um den Ventilschaft (57; 67) anliegt.

4. Regler (5; 6) nach einem der Ansprüche 1 bis 3, wobei der obere Abschnitt (54; 64) des stromaufwärts gelegenen Körpers (53; 63) mit einem Außengewinde (540; 640) zur Befestigung durch Einschrauben in eine Bohrung ausgestattet ist.

5. Regler (5; 6) nach einem der Ansprüche 1 bis 4, wobei der stromaufwärts gelegene Körper (53; 63) den oberen Abschnitt (54; 64) aufweist, der durch einen unteren Abschnitt (55; 65) verlängert ist, wobei der obere Abschnitt (54; 64) dem Kolben (52; 62) zugewandt ist, und der untere Abschnitt (55; 65) eine untere Kuppel (550; 650) aufweist, die auf dem Rand einer Bohrung für einen Gaseingang aufliegt, wobei diese untere Kuppel (550; 650) mit seitlichen Löchern (551; 651) ausgestattet ist, die in die Hochdruckkammer (56; 66) münden.

6. Regler (5; 6) nach Anspruch 5, wobei die untere Kuppel (550; 650) eine Oberseite aufweist, die dem unteren Ende des inneren Kanals (542; 642) des oberen Abschnitts (54; 64) des stromaufwärts gelegenen Körpers (53; 63) zugewandt ist, und in dieser Oberseite ein Hohlraum ausgebildet ist, um den Entspannungssitz (552; 652) zu bilden.

7. Regler (5; 6) nach einem der Ansprüche 5 und 6, wobei der untere Abschnitt (55; 65) des stromaufwärts gelegenen Körpers (53; 63) eine zylindrische Wand (553; 653) umfasst, die die Oberseite der unteren Kuppel (550; 650) umgibt, wobei diese zylindrische Wand (553; 653) mit seitlichen Löchern (554; 654) ausgestattet ist, die in die Hochdruckkammer (56; 66) münden.

8. Regler (5; 6) nach einem der Ansprüche 1 bis 7, wobei der stromabwärts gelegene Körper (51; 61) eine von der Außenseite eines Körpers (13) zugängliche Abdeckung oder einen Verschluss bildet.

9. Regler (5; 6) nach einem der Ansprüche 1 bis 8, wobei der stromabwärts gelegene Körper (51; 61) am Außenumfang zwei O-Ring-Dichtungen (512; 612) innerhalb einer Bohrung und eine Leckageleitung (17; 18) aufweist, die an den Leckagekreislauf (10) angeschlossen ist und in die Bohrung zwischen den beiden Dichtungen (512; 612) mündet.

10. Regler (6) nach einem der Ansprüche 1 bis 9, wobei der Regler (6) ein Sicherheitssystem (601) mit manueller Rückstellung umfasst, das ausgestaltet ist, die Verbindung zwischen der Niederdruckkammer (613) und der Hochdruckkammer (66) automatisch zu schließen, wenn der stromabwärtige Druck in der Niederdruckkammer (613) unter einen vordefinierten niedrigen Schwellendruck fällt, was insbesondere einem Anstieg des Gasflusses am Ausgang des Reglers (6) entspricht, insbesondere in Verbindung mit einem stromabwärts gelegenen Leck.

11. Regler (6) nach Anspruch 10, wobei das Sicherheitssystem (601) einen Verschlussfinger (602) umfasst, der beweglich im stromabwärts gelegenen Körper (61) gegenüber dem offenen oberen Ende des Ventilschafts (67) montiert ist, wobei dieser Verschlussfinger (602) selektiv bewegt werden kann zwischen:
- Einer abgesenkten Position, in der der Verschlussfinger (602) dem offenen oberen Ende des Ventilschafts (67) näher gebracht wird; und
- einer angehobenen Position, in der der Verschlussfinger (602) vom offenen oberen Ende des Ventilschafts (67) entfernt ist.

12. Gasfüll- und -entnahmevorrichtung (1), umfassend:
- Einen Entnahmekreislauf (2), der ein stromaufwärtiges Ende (21), das mit einem Speicheranschluss (3) ausgestattet ist, der für den Anschluss an einen Speicherbehälter (RE) für ein unter Druck stehendes Gas geeignet ist, und ein stromabwärtiges Ende (22) umfasst, das mit einem Entnahmeanschluss (25) ausgestattet ist, der für den Anschluss an ein Entnahmeelement für Gas mit vermindertem Druck geeignet ist, wobei der Entnahmekreislauf (2) mindestens ein vorgesteuertes Absperrventil (4) und mindestens einen Regler (5; 6) umfasst;
- einen Füllkreislauf (7), der ein stromaufwärtiges Ende (71), das mit einem Füllanschluss (8) ausgestattet ist, der für den Anschluss an eine unter Druck stehende Gasquelle (SO) zum Füllen des Speicherbehälters (RE) geeignet ist, und ein stromabwärtiges Ende (72) umfasst, das an das stromaufwärtige Ende (21) des Entnahmekreislaufs (2) angeschlossen ist;
wobei die Vorrichtung **dadurch gekennzeichnet ist, dass** der mindestens eine Regler (5; 6) einem der Ansprüche 1 bis 11 entspricht.

13. Vorrichtung (1) nach Anspruch 12, wobei der Entnahmekreislauf (2) einen ersten Regler (5) und einen zweiten Regler (6) in Reihe umfasst, wobei jeder Regler (5; 6) einem der Ansprüche 1 bis 11 entspricht.

14. Vorrichtung (1) nach Anspruch 13, wobei nur der zweite Regler (6) dem Anspruch 10 oder 11 entspricht.

15. Verwendung einer Vorrichtung (1) nach einem der Ansprüche 12 bis 14, wobei der Speicheranschluss (3) an einem Speicherbehälter (RE) mit gasförmigem Wasserstoff unter Druck angeschlossen ist und der Entnahmeanschluss (25) an ein Entnahmeelement vom Brennstoffzellentyp angeschlossen ist.

## Claims

1. A pressure regulator (5; 6) comprising:
- a static downstream body (51; 61) delimiting a low pressure chamber (513; 613) at the outlet of the pressure regulator (5; 6);
- an upstream body (53; 63) delimiting a high pressure chamber (56; 66) at the inlet of the pressure regulator (5; 6) and carrying an expansion seat (552; 652) disposed opposite an inner channel (542; 642) formed in an upper portion (54; 64) of the upstream body (53; 63);
- a movable piston (52; 62) forming a regulation part on which the gas from the low pressure chamber (513; 613) press on one side and a first biasing member (58; 68) press on the other side, said first biasing member (58; 68) being compressed between the piston (52; 62) and the upstream body (53; 63) by biasing the piston (52; 62) towards the downstream body (51; 61);
- a regulating flap (572; 672) cooperating with the piston (52; 62) and movable relative to the expansion seat (552; 652) between an upstream position for closing a communication between the low pressure chamber (513; 613) and the high pressure chamber (56; 66) and a downstream position for opening the communication between the low pressure chamber (513; 613) and the high pressure chamber (56; 66);
wherein the piston (52; 62) has an inner channel (520; 620) passing through and having two opposite ends:
- an open upper end, on the side of the downstream body (51; 61), facing the low pressure chamber (513; 613), and
- a lower end (523; 623) which opens onto an intermediate chamber (524; 624) interposed between the upstream body (53; 63) and the downstream body (51; 61);
and wherein the pressure regulator (5; 6) further comprises a tubular valve rod (57; 67) provided with an inner channel (570; 670), the valve rod (57; 67) passing through both the inner channel (520; 620) of the piston (52; 62) and the inner channel (542; 642) of the upper portion (54; 64) of the upstream body (53; 63), so that this valve rod (57; 67) presents:
- an upper end; and
- a lower end forming the regulating flap (572; 672) suitable for bearing on the expansion seat (552; 652);
said pressure regulator (5; 6) being **characterized in that:**
- the intermediate chamber (524; 624) is connected to a leakage circuit (10);
- the upper end of the valve rod (57; 67) is flared and is forming a discharging flap (571; 671) suitable for bearing on a discharging seat (521; 621) provided at the upper end of the inner channel (520; 620) of the piston (52; 62); and
- a second biasing member (59; 69) is compressed between the piston (52; 62) and a plate (573; 673) secured to the valve rod (57; 67) and biasing the valve rod (57; 67), relative to the piston (52; 62), in the direction of pressing the discharging valve (571; 671) against the discharging seat (521; 621).

2. The pressure regulator (5; 6) according to claim 1, wherein the second biasing member (59; 69) extends inside the first biasing member (58; 68).

3. The pressure regulator (5; 6) according to any one of claims 1 to 2, wherein the plate (573; 673) is formed of a circlip tight around the valve rod (57; 67).

4. The pressure regulator (5; 6) according to any one of claims 1 to 3, wherein the upper portion (54; 64) of the upstream body (53; 63) is provided with an outer thread (540; 640) for fixing by screwing into a bore.

5. The pressure regulator (5; 6) according to any one of claims 1 to 4, wherein the upstream body (53; 63) has the upper portion (54; 64) extended by a lower portion (55; 65), wherein the upper portion (54; 64) faces the piston (52; 62), and said lower portion (55; 65) has a lower dome (550; 650) bearing on the bottom of a bore for a gas inlet, wherein this lower dome (550; 650) is provided with lateral holes (551; 651) opening into the high pressure chamber (56; 66).

6. The pressure regulator (5; 6) according to claim 5, wherein the lower dome (550; 650) has an upper face facing the lower end of the inner channel (542; 642) of the upper portion (54; 64) of the upstream body (53; 63), and a cavity is formed in this upper face to form the expansion seat (552; 652).

7. The pressure regulator (5; 6) according to any one of claims 5 and 6, wherein the lower portion (55; 65) of the upstream body (53; 63) comprises a cylindrical wall (553; 653) which surrounds the upper face of the lower dome (550; 650), wherein this cylindrical wall (553; 653) is provided with lateral holes (554; 654) opening into the high pressure chamber (56; 66).

8. The pressure regulator (5; 6) according to any one of claims 1 to 7, wherein the downstream body (51; 61) forms a cover or plug accessible from the outside of a body (13).

9. The pressure regulator (5; 6) according to any one of claims 1 to 8, wherein the downstream body (51; 61) has at the outer periphery two O-ring seals (512; 612) inside a bore, and a leakage conduit (17; 18) connected to the leakage circuit (10) opens into the bore between the two seals (512; 612).

10. The pressure regulator (6) according to any one of claims 1 to 9, wherein the pressure regulator (6) comprises a safety system (601) with manual reset configured to automatically close the communication between the low pressure chamber (613) and the high pressure chamber (66) when the downstream pressure in the low pressure chamber (613) goes below a predefined low threshold pressure corresponding to an increase in the gas flow at the outlet of the pressure regulator (6), in particular associated with a downstream leak.

11. The pressure regulator (6) according to claim 10, wherein the safety system (601) comprises a shutter finger (602) movably mounted in the downstream body (61) opposite the open upper end of the valve rod (67), wherein this shutter finger (602) is selectively movable between:
- a lowered position wherein the shutter finger (602) is brought closer to the open upper end of the valve rod (67); and
- a raised position wherein the shutter finger (602) is moved away from the open upper end of the valve rod (67).

12. A device (1) for filling and withdrawing gas, comprising:
- a withdrawing circuit (2) comprising an upstream end (21) provided with a storage connector (3) configured for a connection with a container for storing (RE) a pressurized gas, and a downstream end (22) provided with a withdrawing connector (25) configured for a connection with a withdrawing device for withdrawing gas at reduced pressure, wherein said withdrawing circuit (2) comprises at least one driven isolation gate (4) and at least one pressure regulator (5; 6);
- a filling circuit (7) comprising an upstream end (71) provided with a filling connector (8) configured for a connection with a source of pressurized gas (SO) for filling the storage container (RE), and a downstream end (72) connected to the upstream end (21) of the withdrawing circuit (2);
said device being **characterized in that** the at least one pressure regulator (5; 6) is in accordance with any one of claims 1 to 11.

13. The device (1) according to claim 12, wherein the withdrawing circuit (2) comprises a first pressure regulator (5) and a second pressure regulator (6) in series, wherein each pressure regulator (5; 6) is in accordance with any one of claims 1 to 11.

14. The device (1) according to claim 13, wherein only the second pressure regulator (6) is in accordance claims 10 or 11.

15. A use of a device (1) according to any one of claims 12 to 14, wherein the storage connector (3) is connected to a storage container (RE) of pressurized hydrogen gas and the withdrawing connector (25) is connected to a withdrawing device of a fuel cell type.
